# EUROPEAN PATENT APPLICATION

(11) **EP 4 633 112 A1**
(43) Date of publication of application: **15.10.2025**
(21) Application number: 23899773.8
(22) Date of filing: 22.11.2023
(51) Int. Cl.: H04L 67/1095

(54) **COMPUTING AND NETWORK CONVERGENCE METHOD, APPARATUS, AND STORAGE MEDIUM**

(30) Priority: 05.12.2022 CN 202211551927
(71) Applicant: Datang Mobile Communications Equipment Co., Ltd., Beijing 100085 (CN)
(72) Inventor: WANG, Yapeng, Beijing 100085 (CN); CHENG, Zhimi, Beijing 100085 (CN); SUN, Wanfei, Beijing 100085 (CN); SONG, Yaqin, Beijing 100085 (CN); GU, Xiaofei, Beijing 100085 (CN); HU, Weiqi, Beijing 100085 (CN); LIU, Xianfeng, Beijing 100085 (CN)
(74) Representative: Ipsilon
(86) International application number: PCT/CN2023/133229
(87) International publication number: WO 2024/120194

(57) **Abstract**

Provided in the embodiments of the present disclosure are a computing and network convergence method, an apparatus, and a storage medium. The computing and network convergence method comprises: a unified data storage network element receiving a first message sent by a first network element; and managing computility data on the basis of the first message, the first network element comprising one or more of the following network elements: an access and mobility management function (AMF) network element, a network repository function (NRF) network element, a session management function (SMF) network element, and a user plane function (UPF) network element.

## Description

### CROSS-REFERENCES TO RELATED APPLICATIONS

The present application claims priority to Chinese Patent Application No. 202211551927.5 filed on December 05, 2022, entitled "Computing and Network Convergence Method, Apparatus, and Storage Medium", which is hereby incorporated by reference in its entirety.

### FIELD

The present application relates to the field of communications, and in particular, to methods and apparatuses for computing-network convergence, and a storage medium.

### BACKGROUND

In a 5th generation mobile communication (5G) system, to provide a computing power service, a computing power network may be taken as an application function (AF), which provides computing power by using the network service provided by a mobile communication network. The computing power network may also be implemented as a network function (NF) of a mobile core network, and core functions such as computing power service orchestration and scheduling, computing power route generation, etc. of the computing power network may be implemented by this network function.

However, a divide-and-conquer way between the mobile communication network and the computing power network, that is, a computing power node use a network service through a plug-in mode to provide computing power, or a network schedules computing power in a computing power node of the computing power network through a coordinated mode, has not truly solved a problem of computing-network convergence for future network development trends. Network operators need to build and maintain two networks (a mobile communication network and a computing power network), resulting in high network operation and maintenance expenses, as well as high construction expenses for independent networks.

### BRIEF SUMMARY

Embodiments of the present application provide methods and apparatuses for computing-network convergence, and a storage medium to solve the problem of high operation and maintenance expenses of computing power networks in the related art.

An embodiment of the present application provides a method for computing-network convergence performed by a unified data repository (UDR), including:
receiving a first message transmitted from a first network function; and
managing computing power data based on the first message.

In some embodiments, the first network function includes one or more types of the following network functions:
access and mobility management function (AMF);
network repository function (NRF);
session management function (SMF); or
user plane function (UPF).

In some embodiments, the first message includes one or more of the following messages:
computing power data storage request message;
computing power data deletion request message;
computing power data update request message;
computing power data synchronization request message; or
computing power data query request message.

In some embodiments, managing the computing power data based on the first message includes:
obtaining the computing power data storage request message included in the first message, where the computing power data storage request message includes computing power data; and
storing the computing power data.

In some embodiments, managing the computing power data based on the first message includes:
obtaining the computing power data deletion request message included in the first message, where the computing power data deletion request message includes a computing power node identifier; and
deleting computing power data corresponding to a computing power node indicated by the computing power node identifier.

In some embodiments, managing the computing power data based on the first message includes:
obtaining the computing power data update request message included in the first message, where the computing power data update request message includes a computing power node identifier and target computing power data; and
updating computing power data corresponding to a computing power node indicated by the computing power node identifier to the target computing power data.

In some embodiments, managing the computing power data based on the first message includes:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

In some embodiments, managing the computing power data based on the first message includes:
obtaining the computing power data query request message included in the first message, where the computing power data query request message includes a query condition; and
transmitting, based on the query condition, computing power data meeting the query condition to the first network function.

In some embodiments, the method further includes:
transmitting a second message to the first network function,
the second message includes one or more of the following messages:
   computing power data storage response message;
   computing power data deletion response message;
   computing power data update response message;
   computing power data synchronization response message; or
   computing power data query response message.

In some embodiments, the computing power data include one or more types of the following data:
computing power node registration data;
computing power node state awareness data;
computing power service mirror data; or
computing power scheduling policy data.

An embodiment of the present application further provides a method for computing-network convergence performed by a first network function, including:
transmitting a first message to a unified data repository (UDR), where the first message is used for the UDR to manage computing power data.

In some embodiments, the first network function includes one or more types of the following network functions:
access and mobility management function (AMF);
network repository function (NRF);
session management function (SMF); or
user plane function (UPF).

In some embodiments, the first message includes one or more of the following messages:
computing power data storage request message;
computing power data deletion request message;
computing power data update request message;
computing power data synchronization request message; or
computing power data query request message.

In some embodiments, the method further includes:
receiving a third message transmitted from a computing power node; and
generating the first message based on the third message,
the third message includes one or more of the following messages:
   computing power node registration request message;
   computing power node deregistration request message; or
   computing power node state awareness response message.

In some embodiments, generating the first message based on the third message includes:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, generating the first message based on the third message includes:
obtaining the computing power node deregistration request message included in the third message, where the computing power node deregistration request message includes a computing power node identifier; and
generating the first message based on the computing power node identifier.

In some embodiments, generating the first message based on the third message includes:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the method further includes:
receiving a fourth message transmitted from the UPF; and
the fourth message includes one or more types of the following information:
   computing power data storage information;
   computing power data deletion information; or
   computing power data update information.

In some embodiments, the method further includes:
transmitting a fifth message to a computing power node; and
the fifth message includes one or more of the following messages:
   computing power node registration response message;
   computing power node deregistration response message; or
   computing power node state awareness request message.

In some embodiments, the method further includes:
receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

In some embodiments, in case that the first network function is an SMF, the method further includes:
receiving a computing power request message transmitted from a computing power management function, where the computing power management function is used to generate a computing power demand;
determining computing power data and a computing power scheduling policy based on the computing power request message; and
generating a computing power route based on the computing power data and the computing power scheduling policy.

In some embodiments, determining the computing power data and the computing power scheduling policy based on the computing power request message includes:
determining the computing power demand based on the computing power request message;
determining the computing power data based on the computing power demand; and
receiving the computing power scheduling policy transmitted from a policy control function (PCF), where the computing power scheduling policy is determined by the PCF based on the computing power demand.

In some embodiments, determining the computing power data based on the computing power demand includes:
selecting the computing power data from a local database based on the computing power demand.

In some embodiments, determining the computing power data based on the computing power demand includes:
receiving computing power data transmitted from a unified data management (UDM), where the computing power data are determined by the UDM based on the computing power demand.

In some embodiments, determining the computing power data based on the computing power demand includes:
querying and obtaining the computing power data from the UDR based on the computing power demand.

In some embodiments, in case that the first network function is the SMF or the UPF, the method further includes:
transmitting a query request message to the NRF, where the query request message is used to query a network function (NF) providing a computing power data storage service;
receiving a query response message transmitted from the NRF; and
determining the NF providing the computing power data storage service based on the query response message.

In some embodiments, in case that the first network function is the NRF, the method further includes:
receiving a network function (NF) registration request message transmitted from the NF, where the NF registration request message includes NF registration information; and
storing the NF registration information.

In some embodiments, in case that the first network function is the NRF, the method further includes:
receiving a network function (NF) deregistration request message transmitted from the NF, where the NF deregistration request message includes NF indication information; and
deleting NF registration information indicated by the NF indication information.

In some embodiments, in case that the first network function is the NRF, the method further includes:
receiving a network function (NF) update request message transmitted from the NF, where the NF update request message includes NF indication information; and
updating NF registration information indicated by the NF indication information.

**In** some embodiments, the computing power data include one or more types of the following data:
computing power node registration data;
computing power node state awareness data;
computing power service mirror data; or
computing power scheduling policy data.

An embodiment of the present application further provides a unified data repository (UDR), including a memory, a transceiver, and a processor, where
the memory is used for storing a computer program; the transceiver is used for receiving and transmitting data under control of the processor; and the processor is used for reading the computer program in the memory and performing the following operations:
receiving a first message transmitted from a first network function; and
managing computing power data based on the first message.

**In** some embodiments, the first network function includes one or more types of the following network functions:
access and mobility management function (AMF);
network repository function (NRF);
session management function (SMF); or
user plane function (UPF).

**In** some embodiments, the first message includes one or more of the following messages:
computing power data storage request message;
computing power data deletion request message;
computing power data update request message;
computing power data synchronization request message; or
computing power data query request message.

In some embodiments, the processor is further used for reading the computer program from the memory and performing the following operations:
obtaining the computing power data storage request message included in the first message, where the computing power data storage request message includes computing power data; and
storing the computing power data.

In some embodiments, the processor is further used for reading the computer program from the memory and performing the following operations:
obtaining the computing power data deletion request message included in the first message, where the computing power data deletion request message includes a computing power node identifier; and
deleting computing power data corresponding to a computing power node indicated by the computing power node identifier.

In some embodiments, the processor is further used for reading the computer program from the memory and performing the following operations:
obtaining the computing power data update request message included in the first message, where the computing power data update request message includes a computing power node identifier and target computing power data; and
updating computing power data corresponding to a computing power node indicated by the computing power node identifier to the target computing power data.

In some embodiments, the processor is further used for reading the computer program from the memory and performing the following operations:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

In some embodiments, the processor is further used for reading the computer program from the memory and performing the following operations:
obtaining the computing power data query request message included in the first message, where the computing power data query request message includes a query condition; and
transmitting, based on the query condition, computing power data meeting the query condition to the first network function.

In some embodiments, the processor is further used for reading the computer program from the memory and performing the following operations:
transmitting a second message to the first network function,
the second message includes one or more of the following messages:
   computing power data storage response message;
   computing power data deletion response message;
   computing power data update response message;
   computing power data synchronization response message; or
   computing power data query response message.

In some embodiments, the computing power data include one or more types of the following data:
computing power node registration data;
computing power node state awareness data;
computing power service mirror data; or
computing power scheduling policy data.

An embodiment of the present application further provides a first network function, including a memory, a transceiver, and a processor, where
the memory is used for storing a computer program; the transceiver is used for receiving and transmitting data under control of the processor; and the processor is used for reading the computer program in the memory and performing the following operations:
transmitting a first message to a unified data repository (UDR), where the first message is used for the UDR to manage computing power data.

In some embodiments, the first network function includes one or more types of the following network functions:
access and mobility management function (AMF);
network repository function (NRF);
session management function (SMF); or
user plane function (UPF).

In some embodiments, the first message includes one or more of the following messages:
computing power data storage request message;
computing power data deletion request message;
computing power data update request message;
computing power data synchronization request message; or
computing power data query request message.

In some embodiments, the processor is further used for reading the computer program from the memory and performing the following operations:
receiving a third message transmitted from a computing power node; and
generating the first message based on the third message,
the third message includes one or more of the following messages:
   computing power node registration request message;
   computing power node deregistration request message; or
   computing power node state awareness response message.

In some embodiments, the processor is further used for reading the computer program from the memory and performing the following operations:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, the processor is further used for reading the computer program from the memory and performing the following operations:
obtaining the computing power node deregistration request message included in the third message, where the computing power node deregistration request message includes a computing power node identifier; and
generating the first message based on the computing power node identifier.

In some embodiments, the processor is further used for reading the computer program from the memory and performing the following operations:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the processor is further used for reading the computer program from the memory and performing the following operations:
receiving a fourth message transmitted from the UPF; and
the fourth message includes one or more types of the following information:
   computing power data storage information;
   computing power data deletion information; or
   computing power data update information.

In some embodiments, the processor is further used for reading the computer program from the memory and performing the following operations:
transmitting a fifth message to a computing power node; and
the fifth message includes one or more of the following messages:
   computing power node registration response message;
   computing power node deregistration response message; or
   computing power node state awareness request message.

In some embodiments, the processor is further used for reading the computer program from the memory and performing the following operations:
receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

In some embodiments, in case that the first network function is the SMF, the processor is further used for reading the computer program from the memory and performing the following operations:
receiving a computing power request message transmitted from a computing power management function, where the computing power management function is used to generate a computing power demand;
determining computing power data and a computing power scheduling policy based on the computing power request message; and
generating a computing power route based on the computing power data and the computing power scheduling policy.

In some embodiments, the processor is further used for reading the computer program from the memory and performing the following operations:
determining the computing power demand based on the computing power request message;
determining the computing power data based on the computing power demand; and
receiving the computing power scheduling policy transmitted from a policy control function (PCF), where the computing power scheduling policy is determined by the PCF based on the computing power demand.

In some embodiments, the processor is further used for reading the computer program from the memory and performing the following operations:
selecting the computing power data from a local database based on the computing power demand.

In some embodiments, the processor is further used for reading the computer program from the memory and performing the following operations:
receiving computing power data transmitted from a unified data management (UDM), where the computing power data are determined by the UDM based on the computing power demand.

In some embodiments, the processor is further used for reading the computer program from the memory and performing the following operations:
querying and obtaining the computing power data from the UDR based on the computing power demand.

In some embodiments, in case that the first network function is the SMF or the UPF, the processor is further used for reading the computer program from the memory and performing the following operations:
transmitting a query request message to the NRF, where the query request message is used to query a network function (NF) providing a computing power data storage service;
receiving a query response message transmitted from the NRF; and
determining the NF providing the computing power data storage service based on the query response message.

In some embodiments, in case that the first network function is the NRF, the processor is further used for reading the computer program from the memory and performing the following operations:
receiving a network function (NF) registration request message transmitted from the NF, where the NF registration request message includes NF registration information; and
storing the NF registration information.

In some embodiments, in case that the first network function is the NRF, the processor is further used for reading the computer program from the memory and performing the following operations:
receiving a network function (NF) deregistration request message transmitted from the NF, where the NF deregistration request message includes NF indication information; and
deleting NF registration information indicated by the NF indication information.

In some embodiments, in case that the first network function is the NRF, the processor is further used for reading the computer program from the memory and performing the following operations:
receiving a network function (NF) update request message transmitted from the NF, where the NF update request message includes NF indication information; and
updating NF registration information indicated by the NF indication information.

**In** some embodiments, the computing power data include one or more types of the following data:
computing power node registration data;
computing power node state awareness data;
computing power service mirror data; or
computing power scheduling policy data.

An embodiment of the present application further provides an apparatus for computing-network convergence, for use in a unified data repository (UDR), including:
a first receiving module, used for receiving a first message transmitted from a first network function; and
a managing module, used for managing computing power data based on the first message.

In some embodiments, the first network function includes one or more types of the following network functions:
access and mobility management function (AMF);
network repository function (NRF);
session management function (SMF); or
user plane function (UPF).

In some embodiments, the first message includes one or more of the following messages:
computing power data storage request message;
computing power data deletion request message;
computing power data update request message;
computing power data synchronization request message; or
computing power data query request message.

In some embodiments, the managing module is further used for:
obtaining the computing power data storage request message included in the first message, where the computing power data storage request message includes computing power data; and
storing the computing power data.

In some embodiments, the managing module is further used for:
obtaining the computing power data deletion request message included in the first message, where the computing power data deletion request message includes a computing power node identifier; and
deleting computing power data corresponding to a computing power node indicated by the computing power node identifier.

In some embodiments, the managing module is further used for:
obtaining the computing power data update request message included in the first message, where the computing power data update request message includes a computing power node identifier and target computing power data; and
updating computing power data corresponding to a computing power node indicated by the computing power node identifier to the target computing power data.

In some embodiments, the managing module is further used for:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

In some embodiments, the managing module is further used for:
obtaining the computing power data query request message included in the first message, where the computing power data query request message includes a query condition; and
transmitting, based on the query condition, computing power data meeting the query condition to the first network function.

In some embodiments, the apparatus further includes a second transmitting module, where
the second transmitting module is used for transmitting a second message to the first network function,
the second message includes one or more of the following messages:
   computing power data storage response message;
   computing power data deletion response message;
   computing power data update response message;
   computing power data synchronization response message; or
   computing power data query response message.

In some embodiments, the computing power data include one or more types of the following data:
computing power node registration data;
computing power node state awareness data;
computing power service mirror data; or
computing power scheduling policy data.

An embodiment of the present application further provides an apparatus for computing-network convergence, for use in a first network function, including:
a first transmitting module, used for transmitting a first message to a unified data repository (UDR), where the first message is used for the UDR to manage computing power data.

In some embodiments, the first network function includes one or more types of the following network functions:
access and mobility management function (AMF);
network repository function (NRF);
session management function (SMF); or
user plane function (UPF).

In some embodiments, the first message includes one or more of the following messages:
computing power data storage request message;
computing power data deletion request message;
computing power data update request message;
computing power data synchronization request message; or
computing power data query request message.

In some embodiments, the apparatus further includes:
a second receiving module, used for receiving a third message transmitted from a computing power node; and
a first generating module, used for generating the first message based on the third message,
the third message includes one or more of the following messages:
   computing power node registration request message;
   computing power node deregistration request message; or
   computing power node state awareness response message.

In some embodiments, the first generating module is further used for:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, the first generating module is further used for:
obtaining the computing power node deregistration request message included in the third message, where the computing power node deregistration request message includes a computing power node identifier; and
generating the first message based on the computing power node identifier.

In some embodiments, the first generating module is further used for:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the apparatus further includes:
a third receiving module, used for receiving a fourth message transmitted from the UPF; and
the fourth message includes one or more types of the following information:
   computing power data storage information;
   computing power data deletion information; or
   computing power data update information.

In some embodiments, the apparatus further includes:
a third transmitting module, used for transmitting a fifth message to a computing power node; and
the fifth message includes one or more of the following messages:
   computing power node registration response message;
   computing power node deregistration response message; or
   computing power node state awareness request message.

In some embodiments, the apparatus further includes:
a fourth receiving module, used for receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

In some embodiments, in case that the first network function is the SMF, the apparatus further includes:
a fifth receiving module, used for receiving a computing power request message transmitted from a computing power management function, where the computing power management function is used to generate a computing power demand;
a first determining module, used for determining computing power data and a computing power scheduling policy based on the computing power request message; and
a second generating module, used for generating a computing power route based on the computing power data and the computing power scheduling policy.

In some embodiments, the first determining module further includes:
a first determining unit, used for determining the computing power demand based on the computing power request message;
a second determining unit, used for determining the computing power data based on the computing power demand; and
a receiving unit, used for receiving the computing power scheduling policy transmitted from a policy control function (PCF), where the computing power scheduling policy is determined by the PCF based on the computing power demand.

In some embodiments, the second determining unit is further used for:
selecting the computing power data from a local database based on the computing power demand.

In some embodiments, the second determining unit is further used for:
receiving computing power data transmitted from a unified data management (UDM), where the computing power data are determined by the UDM based on the computing power demand.

In some embodiments, the second determining unit is further used for:
querying and obtaining the computing power data from the UDR based on the computing power demand.

In some embodiments, in case that the first network function is the SMF or the UPF, the apparatus further includes:
a fourth transmitting module, used for transmitting a query request message to the NRF, where the query request message is used to query a network function (NF) providing a computing power data storage service;
a sixth receiving module, used for receiving a query response message transmitted from the NRF; and
a second determining module, used for determining the NF providing the computing power data storage service based on the query response message.

In some embodiments, in case that the first network function is the NRF, the apparatus further includes:
a seventh receiving module, used for receiving a network function (NF) registration request message transmitted from the NF, where the NF registration request message includes NF registration information; and
a storing module, used for storing the NF registration information.

In some embodiments, in case that the first network function is the NRF, the apparatus further includes:
an eighth receiving module, used for receiving a network function (NF) deregistration request message transmitted from the NF, where the NF deregistration request message includes NF indication information; and
a deleting module, used for deleting NF registration information indicated by the NF indication information.

In some embodiments, in case that the first network function is the NRF, the apparatus further includes:
a ninth receiving module, used for receiving a network function (NF) update request message transmitted from the NF, where the NF update request message includes NF indication information; and
an updating module, used for updating NF registration information indicated by the NF indication information.

In some embodiments, the computing power data include one or more types of the following data:
computing power node registration data;
computing power node state awareness data;
computing power service mirror data; or
computing power scheduling policy data.

An embodiment of the present application further provides a system for computing-network convergence, including:
a unified data repository (UDR), used for implementing a function of the UDR and managing computing power data of a computing power node;
an access and mobility management function (AMF), used for registering and deregistering the computing power node and performing state awareness of the computing power node;
a session management function (SMF), used for computing power service orchestration and scheduling, and generating a computing power route based on the computing power orchestration and scheduling policy;
a user plane function (UPF), used for forwarding the computing power route, registering and deregistering the computing power node, and performing state awareness of the computing power node;
a policy control function (PCF), used for managing the computing power orchestration and scheduling policy;
a unified data management function (UDM), used for unified management and maintenance of the computing power node and management of the computing power data;
a network repository function (NRF), used for registering a core network function and a storage service of the core network function, registering and deregistering the computing power node, and performing state awareness of the computing power node; and
a computing power management function, used for managing external openness of the computing power data and an application demand of an awareness service, and operating and maintaining computing power.

An embodiment of the present application further provides a processor-readable storage medium storing a computer program, where the computer program is used to cause a processor to perform the methods for computing-network convergence as described above.

An embodiment of the present application further provides a computer-readable storage medium storing a computer program, where the computer program is used to cause a computer to perform the methods for computing-network convergence as described above.

An embodiment of the present application further provides a communication device-readable storage medium storing a computer program, where the computer program is used to cause a communication device to perform the methods for computing-network convergence as described above.

An embodiment of the present application further provides a chip product-readable storage medium storing a computer program, where the computer program is used to cause a chip product to perform the methods for computing-network convergence as described above.

In the methods and apparatuses for computing-network convergence, and the storage medium provided in the embodiments of the present application, the UDR manages computing power data based on the first message transmitted from the first network function. Various network functions may provide the computing power service while providing the mobile communication service, which deeply converges the mobile communication network and the computing power network, improves network service capabilities and efficiency, and also reduces network operation and maintenance expenses as well as network construction expenses.

### BRIEF DESCRIPTION OF THE DRAWINGS

To illustrate solutions in the embodiments of the present application more clearly, the drawings used in the descriptions of the embodiments are briefly described below. The drawings in the following description are some embodiments of the present application, and other drawings may be obtained based on these drawings without any creative effort for those skilled in the art.
FIG. 1 is a first schematic flowchart of a method for computing-network convergence according to an embodiment of the present application;
FIG. 2 is a first signaling interaction diagram of an example scenario of a method for computing-network convergence according to an embodiment of the present application;
FIG. 3 is a second signaling interaction diagram of an example scenario of a method for computing-network convergence according to an embodiment of the present application;
FIG. 4 is a third signaling interaction diagram of an example scenario of a method for computing-network convergence according to an embodiment of the present application;
FIG. 5 is a fourth signaling interaction diagram of an example scenario of a method for computing-network convergence according to an embodiment of the present application;
FIG. 6 is a fifth signaling interaction diagram of an example scenario of a method for computing-network convergence according to an embodiment of the present application;
FIG. 7 is a sixth signaling interaction diagram of an example scenario of a method for computing-network convergence according to an embodiment of the present application;
FIG. 8 is a seventh signaling interaction diagram of an example scenario of a method for computing-network convergence according to an embodiment of the present application;
FIG. 9 is an eighth signaling interaction diagram of an example scenario of a method for computing-network convergence according to an embodiment of the present application;
FIG. 10 is a ninth signaling interaction diagram of an example scenario of a method for computing-network convergence according to an embodiment of the present application;
FIG. 11 is a tenth signaling interaction diagram of an example scenario of a method for computing-network convergence according to an embodiment of the present application;
FIG. 12 is an eleventh signaling interaction diagram of an example scenario of a method for computing-network convergence according to an embodiment of the present application;
FIG. 13 is a twelfth signaling interaction diagram of an example scenario of a method for computing-network convergence according to an embodiment of the present application;
FIG. 14 is a thirteenth signaling interaction diagram of an example scenario of a method for computing-network convergence according to an embodiment of the present application;
FIG. 15 is a fourteenth signaling interaction diagram of an example scenario of a method for computing-network convergence according to an embodiment of the present application;
FIG. 16 is a fifteenth signaling interaction diagram of an example scenario of a method for computing-network convergence according to an embodiment of the present application;
FIG. 17 is a second schematic flowchart of a method for computing-network convergence according to an embodiment of the present application;
FIG. 18 is a schematic structural diagram of a unified data repository (UDR) according to an embodiment of the present application;
FIG. 19 is a schematic structural diagram of a first network function according to an embodiment of the present application;
FIG. 20 is a first schematic structural diagram of an apparatus for computing-network convergence according to an embodiment of the present application; and
FIG. 21 is a second schematic structural diagram of an apparatus for computing-network convergence according to an embodiment of the present application.

### DETAILED DESCRIPTION

A computing power network may serve as an application function (AF) to use a network service provided by a mobile communication network. On the basis of a traditional 5th generation mobile communication (5G) core network architecture, the computing power network may also be implemented as a network function (NF) of a mobile core network. The NF has an interface for interconnection with the 5G core network. Core functions of the computing power network, such as computing power service orchestration and scheduling, and generation of a computing power route, are implemented by this NF. However, mobile communication network and the computing power network in the above methods are in a divide-and-conquer way, and computing-network convergence has not been truly achieved.

To provide computing power services, a network operator needs to simultaneously build and maintain two networks, namely the mobile communication network and the computing power network, resulting in increased expenses for network operation and maintenance, such as increased operating expenses (OPEX). The computing power network needs to be independently built on the basis of the 5G core network architecture, resulting in increased construction investment such as capital expenditure (CAPEX).

Based on the above problems, embodiments of the present application provides methods and apparatuses for computing-network convergence, and a storage medium. By deeply converging the mobile communication network with the computing power network, each network function may provide both the mobile communication connection service and the computing power service, which improves the capabilities and efficiency of service of the network; and operation and maintenance are in one unified network, the expenses of network operation and maintenance is greatly reduced, saving the investment expenses of independent network construction.

To clarify the objective, solution, and advantage of the embodiments of the present application, a clear and complete description of solutions in the embodiments of the present application is provided below in conjunction with the accompanying drawings. The described embodiments are only a part of embodiments of the present application, not all of them. Based on the embodiments of the present application, all other embodiments obtained by those skilled in the art without creative effort are within the scope of protection of the present application.

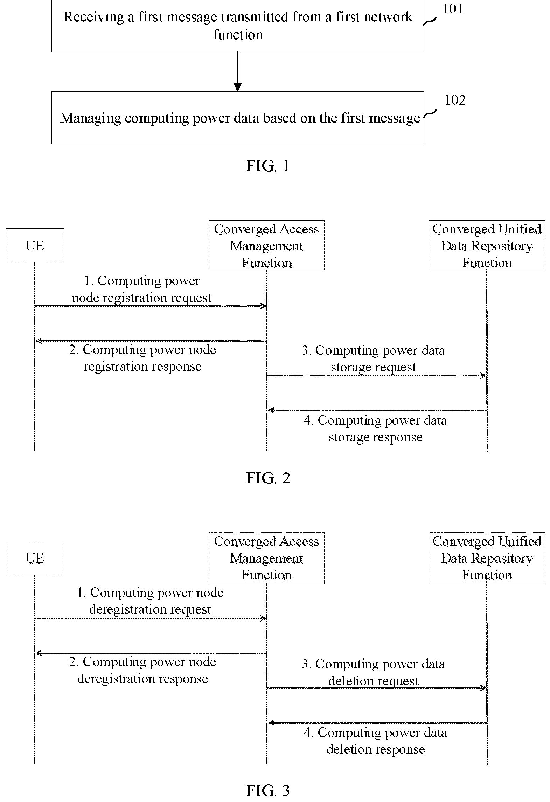

FIG. 1 is a first schematic flowchart of a method for computing-network convergence according to an embodiment of the present application. As shown in FIG. 1, the embodiments of the present application provide a method for computing-network convergence, which is performed by a unified data repository (UDR). The method includes the following steps.

Step 101: receiving a first message transmitted from a first network function.

In an embodiment, the first network function transmits a first message to the UDR, where the first message is used for the UDR to manage computing power data, and the UDR receives the first message.

The first network function is a core network function that may transmit a message to the UDR, such as an access and mobility management function (AMF), a network repository function (NRF), and a session management function (SMF) etc.

In an embodiment, the UDR may be a UDR of a mobile communication network that has been extended with computing power functions; the UDR may also be a new network function that may implement both UDR functions in the mobile communication network and a function of providing a computing power service. The data stored in the UDR in the embodiments of the present application includes: application data and computing power data. The UDR is connected to other network functions through a service-oriented interface.

The first message is a request message transmitted from the first network function to the UDR, requesting the UDR to perform an operation on the computing power data.

For example, the AMF transmits a computing power data storage request message to the UDR, requesting the UDR to store computing power data of a computing power node; the UDR receives the computing power data storage request message.

For example, the NRF transmits a computing power data deletion request message to the UDR, requesting the UDR to delete computing power data of a computing power node; the UDR receives the computing power data deletion request message.

For example, a user plane function (UPF) transmits a computing power data update request message to the UDR, requesting the UDR to update computing power data of a computing power node; the UDR receives the computing power data update request message.

For example, the SMF transmits a computing power data synchronization request message to the UDR, requesting the UDR to synchronize computing power data with the SMF; the UDR receives the computing power data synchronization request message.

For example, the SMF transmits a computing power data query request message to the UDR, requesting the UDR to query the available stored computing power data; the UDR receives the computing power data query request message.

Step 102: managing computing power data based on the first message.

In an embodiment, the UDR manages computing power data based on the first message transmitted from the first network function.

The UDR managing computing power data refers to the UDR storing computing power data, deleting computing power data, updating computing power data, and synchronizing computing power data. Computing power data consumers, including the AMF, the UPF, the NRF, and a unified data management function (UDM), etc., save and retrieve computing power data in the UDR through a service-oriented interface.

For example, the UDR receives a computing power data storage request message transmitted from the UPF, and stores, based on the computing power data storage request message, the computing power data of a computing power node, completing the registration of the computing power node.

For example, the UDR receives a computing power data deletion request message transmitted from the AMF, and deletes, based on the computing power data deletion request message, the computing power data of a computing power node, completing the deregistration of the computing power node.

For example, the UDR receives a computing power data update request message transmitted from the NRF, and updates, based on the computing power data update request message, the computing power data of a computing power node, completing the state awareness of the computing power node.

For example, the SMF receives a computing power data synchronization request message transmitted from the NRF, and the UDR synchronizes, based on the computing power data synchronization request message, the computing power data with the SMF.

For example, the SMF receives a computing power data query request message transmitted from the NRF, and the UDR queries, based on the computing power data query request message, the available computing power data stored in the UDR.

In the method for computing-network convergence provided in the embodiments of the present application, the first network function transmits the first message to the UDR, and the UDR manages computing power data based on the first message. Various network functions may provide the computing power service while providing the mobile communication service, which deeply converges the mobile communication network and the computing power network, improves network service capabilities and efficiency, and also reduces network operation and maintenance expenses as well as network construction expenses.

In some embodiments, the first network function includes one or more types of the following network functions:
access and mobility management function (AMF);
network repository function (NRF);
session management function (SMF); or
user plane function (UPF).

In an embodiment, the first network function may be a first network function of a mobile communication network that has been extended with computing power functions; the first network function may also be a new network function that may implement both a mobile communication connection function of a first network function and a function of providing a computing power service.

For example, the AMF included in the first network function not only implements functions in the mobile communication network (i.e., receiving all information associated with connections and sessions from a terminal, etc.), but further provides a computing power service. In case that a mobile terminal acts as a computing power node, the AMF may achieve registration and deregistration functions of the computing power node, as well as a state awareness function of the computing power node.

For example, the NRF included in the first network function not only implements functions in the mobile communication network (i.e., network function service registration and state monitoring, etc.), but further provides a computing power service. In case that a mobile core network function (NF) serves as a computing power node, the NRF may achieve the registration, deregistration, and state awareness functions of the computing power node, as well as the registration, deregistration, and update of the NF and a service thereof.

For example, the SMF included in the first network function not only implements functions in the mobile communication network, such as creating, updating, and deleting a protocol data unit (PDU) session, managing session environment with the UPF, but further provides a computing service. Together with the UPF, the SMF may achieve the registration, deregistration, and state awareness functions of the computing power node, and may query a network function that may provide computing power data storage services from other network functions (such as the NRF, the UDM, and the UDR, etc.). The SMF may also generate a computing power route and store the computing power data locally.

For example, the UPF included in the first network function not only implements functions in the mobile communication network (i.e., routing and forwarding a user plane packet, etc.), but further provides a computing power service. In case that a data network (DN), a server, an edge computing platform, an Internet data center (IDC), etc. are used as a computing power node, the UPF may achieve the registration, deregistration and state awareness functions of the computing power node.

In the method for computing-network convergence provided by the embodiment of the present application, the computing power node may be a terminal/user equipment (UE), an NF, a DN, a server, an edge computing platform, an IDC, etc. For different computing power nodes, request messages for managing computing power data are transmitted to the UDR through different first network functions, which deeply converges the computing network and the mobile communication network, and may be flexibly used in various scenarios.

In some embodiments, the first message includes one or more of the following messages:
computing power data storage request message;
computing power data deletion request message;
computing power data update request message;
computing power data synchronization request message; or
computing power data query request message.

In an embodiment, the computing power node transmits a third message to the first network function, where the first network function receives the third message and generates the first message based on the third message.

The third message includes one or more of the following messages: computing power node registration request message; computing power node deregistration request message; or computing power node state awareness response message.

The computing power node registration request message carries one or more types of the following information: device identifier, computing power node indication (used to indicate that the node is a computing power node), computing power node type, computing power size, computing power node location, computing power service deployed on the computing power node, available service time, or available service range, etc.

The first network function generates a computing power data storage request message based on a computing power node registration request message and transmits the computing power data storage request message to the UDR. The computing power data storage request message is used to request the UDR to store computing power data of a computing power node. The computing power data storage request message carries a unique computing power node identifier and the registration data of the computing power node. The unique computing power node identifier is assigned by the first network function to the computing power node, and the registration data of the computing power node is data carried in the computing power node registration request message.

For example, in case that the UE acts as a computing power node, the UE transmits a computing power data storage request message to the AMF. The AMF receives the message and obtains registration data of the computing power node based on the message, such as device identifier, computing power node indication, computing power node type, computing power size, computing power node location, computing power service deployed on the computing power node, available service time, and available service range, etc. The AMF also assigns a unique computing power node identifier, generates a computing power data storage request message based on the unique identifier and registration data of the computing power node, and transmits the computing power data storage request message to the UDR.

The computing power node deregistration request message carries the following information: device identifier and unique computing power node identifier, etc.

The first network function generates a computing power data deletion request message based on the computing power node deregistration request message, and transmits the computing power data deletion request message to the UDR. The computing power data deletion request message is used to request the UDR to delete the computing power data of a computing power node. The computing power data deletion request message carries information such as device identifier and unique computing power node identifier.

For example, in case that the NF acts as a computing power node, the NF transmits a computing power data deregistration request message to the NRF. The NRF receives the message and obtains information such as the device identifier and the unique computing power node identifier based on the message. The NRF generates a computing power data deletion request message based on the unique identifier and the device identifier to generate computing power data deletion request message, and transmits the computing power data deletion request message to the UDR.

The computing power node state awareness response message carries computing power node state awareness data, i.e., dynamically changed data being aware to and reported by the computing power node, such as a load of the computing power node.

The first network function generates a computing power data update request message based on the computing power node state awareness response message and transmits the computing power data update request message to the UDR. The computing power data update request message is used to request the UDR to update computing power data of a computing power node. The computing power data update request message carries computing power node state awareness data.

For example, in case that the server acts as a computing power node, the UPF first transmits a computing power node state awareness request message to the server, requesting to perceive the state of the computing power node. The computing power node state awareness request message carries information such as unique computing power node identifier, awareness resource type, resource awareness cycle, and computing power node load information.

The server feeds back a computing power node state awareness response message to the UPF. The UPF receives the message and obtains computing power node state awareness data based on the message, and generates a computing power data update request message carrying the computing power node state awareness data and report the computing power data update request message to the UDR.

The awareness resource type includes a computing power service, a central processing unit (CPU), a graphics processing unit (GPU), a storage, etc. In case that the awareness resource type is the computing power service, the computing power node load information includes a service deployed on the computing power node and a service load (such as a quantity of sessions of the service, etc.); in case that the awareness resource type is the CPU, the computing power node load information includes a quantity of used CPUs and a CPU usage rate, etc.; in case that the awareness resource type is the GPU, the computing power node load information includes a quantity of used GPUs and a GPU usage rate, etc.; and in case that the awareness resource type is the storage, the computing power node load information includes used storage capacity and remained storage capacity, etc. In case that the computing power node state awareness data are reported, the computing power node state awareness data may include one or more items of the data included in the computing power node load information mentioned above.

By directly interacting with the UDR through the service-oriented interface of the UPF, a signaling procedure between NFs may be simplified and a quantity of signaling interactions between interfaces may be reduced.

In an embodiment, the first message further includes a computing power data synchronization request message. The first network function transmits a computing power data synchronization request message to the UDR, and the UDR receives the computing power data synchronization request message. The UDR and the first network function synchronize computing power data based on the computing power data synchronization request message.

For example, the SMF may store and manage the computing power data locally, and maintain a local computing power resource pool. The SMF transmits a computing power data synchronization request message to the UDR, and the message carries a data synchronization range indicating the synchronization of computing power data corresponding to a specified computing power node. The UDR synchronizes the computing power data based on the computing power data synchronization request message.

In an embodiment, the synchronization of the computing power data may also occur in the following situations: in case that the UDR updates computing power data, the UDR actively transmits updated data to the SMF. Alternatively, in case that the resource occupancy state changes after the SMF performs service orchestration and scheduling based on the local resource pool, the SMF transmits updated computing power data to the UDR.

In an embodiment, the first message further includes a computing power data query request message. The first network function transmits a computing power data query request message to the UDR, and the UDR receives the computing power data query request message and queries computing power data based on the computing power data query request message.

For example, after obtaining the computing power demand, in case that the SMF does not store computing power data locally, the SMF transmits a computing power data query request message to the UDR, and the request message carries computing power demand information. The UDR receives the request message and queries available computing power data meeting the computing power demand locally based on the computing power demand information.

In the method for computing-network convergence provided in the embodiments of the present application, based on the first message transmitted from the first network function, the computing power data are stored, deleted, updated, synchronized, and queried. The UDR implements storage management of the computing power data, and some of the first messages are generated by the first network function based on a message transmitted from the computing power node, which truly and deeply converges the computing power network into the mobile communication network, improves network service capabilities, and reduces the expenses of computing-network convergence.

In an embodiment, the first network function may also receive a fourth message transmitted from the UPF, and the fourth message is generated by the UPF based on the third message. The fourth message includes computing power data storage information, computing power data deletion information, and computing power data update information.

For example, the UPF receives a computing power node registration request message transmitted from a computing power node server, and the computing power node registration request message carries computing power node registration data. After receiving the computing power node registration request message, the UPF assigns a computing power node identifier to the corresponding computing power node, then generates computing power data storage information based on the computing power node identifier and the computing power node registration data, and transmits the computing power data storage information to the SMF. The SMF requests the UDR to store the computing power data.

In the method for computing-network convergence provided in the embodiments of the present application, the first network function directly receives the request message or the response message transmitted from a computing power node. In case that the first network function is an SMF, the first network function may also receive a request message transmitted from the UPF, generate the first message based on the message transmitted from the UPF, and transmitting the first message to the UDR. Multiple ways may be flexibly applied according to actual scenarios to enable the first network function to obtain information associated with computing power node registration, deregistration, or state awareness.

In an embodiment, in case that the first network function is an NRF, the NRF receives an NF registration request message transmitted from an NF, and the NF registration request message includes NF registration information. The NRF stores the NF registration information. The NF registration information includes information such as unique network function identifier, network function address, and available service, etc.

In case that the first network function is an NRF, the NRF receives an NF deregistration request message transmitted from NF, and the NF deregistration request message includes NF indication information. The NRF deletes NF registration information indicated by the NF indication information. The NF indication information includes information such as unique network function identifier, and network function address, etc.

In case that the first network function is an NRF, the NRF receives an NF update request message transmitted from NF, and the NF update request message includes NF indication information. The NRF updates the NF registration information. The NF update request message may further include changed service information, such as added service list, and deleted service list, etc.

In the method for computing-network convergence provided in the embodiments of the present application, the NF that may provide computing power service may be managed through the NRF, facilitating the first network function to query the NF that may provide computing power services, and quickly determining the NF that may provide computing power services, which improves the efficiency of computing power data storage and enhances the service capabilities of the network.

In some embodiments, managing the computing power data based on the first message includes:
obtaining the computing power data storage request message included in the first message, where the computing power data storage request message includes computing power data; and
storing the computing power data.

In an embodiment, the computing power node transmits a computing power node registration request message to the first network function, and the computing power node registration request message includes the computing power data of the computing power node. The first network function transmits a computing power node registration response message to the computing power node, and the computing power node registration response message carries a generated computing power node identifier.

The first network function receives the computing power node registration request message, obtains the computing power data included therein, generates a computing power node identifier for the computing power node, generates a computing power data storage request message based on the computing power node identifier and the computing power data, and transmits the computing power data storage request message to the UDR. The computing power node identifier is unique, that is, the computing power node identifier is the unique identifier of the corresponding computing power node. The first network function feeds back a computing power data storage response message to the computing power node, and the computing power data storage response message carries the computing power node identifier.

The UDR receives the computing power data storage request message, obtains the computing power data included therein, and stores the computing power data locally.

For example, the computing power node UE transmits a computing power node registration request message to the AMF, and the computing power node registration request message carries the computing power data of the UE. The AMF receives the computing power node registration request message, generates a computing power node identifier for the UE, and then carries the computing power node identifier and the computing power data of the UE in a computing power data storage request message, transmitting the computing power data storage request message to the UDR. The UDR determines the computing power data and the corresponding computing power node identifier based on the computing power data storage request message, and stores the computing power data and the computing power node identifier locally. The UDR feeds back a computing power data storage response message to the computing power node, to feed back information about successful storage of the computing power data.

In an embodiment, in case that the first network function is an SMF, the computing power node may also transmit a computing power node registration request message to the UPF, and the computing power node registration request message includes the computing power data of the computing power node.

The UPF receives the computing power node registration request message, obtains the computing power data included therein, generates a computing power node identifier for the computing power node, generates computing power data storage information based on the computing power node identifier and the computing power data, and transmits the computing power data storage information to the SMF. The computing power node identifier is unique, that is, the computing power node identifier is the unique identifier of the corresponding computing power node. The UPF transmits a computing power node registration response message to the computing power node, and the computing power node registration response message carries the generated computing power node identifier.

The SMF generates a computing power data storage request message based on the computing power node identifier and computing power data in the computing power data storage information, and transmits the computing power data storage request message to the UDR. The UDR receives the computing power data storage request message, obtains the computing power data included therein, and stores the computing power data locally. The UDR feeds back a computing power data storage response message to the computing power node, to feed back information about successful storage of the computing power data.

In an embodiment, in case that the first network function is an SMF or a UPF, before transmitting a computing power data storage request message to the UDR, the SMF or the UPF may first transmit a query request message to the NRF to query the NF providing the computing power data storage service. The NRF feeds back a query result to the SMF or the UPF, and the SMF or the UPF determines the NF providing the computing power data storage service based on the query result and transmits the computing power data storage request message to that NF.

In the method for computing-network convergence provided in the embodiments of the present application, the UDR stores and manages the computing power data based on the computing power data storage request message transmitted from the first network function, which deeply converges the computing power network into the mobile communication network, improves the efficiency of storing and querying computing power data, enhances network service capabilities, and reduces the expenses of computing-network convergence.

In some embodiments, managing the computing power data based on the first message includes:
obtaining the computing power data deletion request message included in the first message, where the computing power data deletion request message includes a computing power node identifier; and
deleting computing power data corresponding to a computing power node indicated by the computing power node identifier.

In an embodiment, the computing power node transmits a deregistration request message to the first network function, and the deregistration request message includes a computing power node identifier. The first network function transmits a deregistration response message to the computing power node, to feed back information about successful deregistration of the computing power node.

The first network function receives a deregistration request message from the computing power node, obtains the computing power node identifier included therein, generates a computing power data deletion request message based on the computing power node identifier, and transmits the computing power data deletion request message to the UDR. The computing power node identifier is unique, that is, the computing power node identifier is the unique identifier of the corresponding computing power node.

The UDR receives the computing power data deletion request message, obtains the computing power node identifier included therein, and deletes the computing power data corresponding to the computing power node indicated by the computing power node identifier. The UDR feeds back a computing power data deletion response message to the computing power node, to feed back information about successful deletion of the computing power data.

In an embodiment, in case that the first network function is an SMF, the computing power node may also transmit a computing power node deregistration request message to the UPF, and the computing power node deregistration request message includes a computing power node identifier.

The UPF receives the computing power node deregistration request message, obtains the computing power node identifier included therein, generates a computing power data deletion request message based on the computing power node identifier, and transmits the computing power data deletion request message to the SMF. The computing power node identifier is unique, that is, the computing power node identifier is the unique identifier of the corresponding computing power node. The UPF transmits a deregistration response message to the computing power node, to feed back information about successful deregistration of the computing power node.

The SMF generates a computing power data deletion request message based on the computing power node identifier in the computing power data deletion information, and transmits the computing power data deletion request message to the UDR. The UDR receives the computing power data deletion request message, obtains the computing power node identifier included therein, and deletes the computing power data corresponding to the computing power node indicated by the computing power node identifier. The UDR feeds back a computing power data deletion response message to the computing power node, to feed back information about successful deletion of the computing power data.

In the method for computing-network convergence provided in the embodiments of the present application, the UDR deletes the computing power data based on the computing power data deletion request message transmitted from the first network function, which deeply converges the computing power network into the mobile communication network, improves the efficiency of computing power data deletion, enhances the service capability of the network, and reduces the expenses of computing-network convergence.

In some embodiments, managing the computing power data based on the first message includes:
obtaining the computing power data update request message included in the first message, where the computing power data update request message includes a computing power node identifier and target computing power data; and
updating computing power data corresponding to a computing power node indicated by the computing power node identifier to the target computing power data.

In an embodiment, the first network function may transmit a computing power node state awareness request message to the computing power node, requesting computing power node state awareness data of a computing power node. After receiving the request message, the computing power node transmits a computing power node state awareness response message to the first network function, and the computing power node state awareness response message includes computing power node state awareness data and a computing power node identifier.

The first network function receives the computing power node state awareness response message, obtains the computing power node state awareness data and the computing power node identifier included therein, generates a computing power data update request message based on the computing power node state awareness data and the computing power node identifier, and transmits the computing power data update request message to the UPF. The computing power node identifier is unique, that is, the computing power node identifier is the unique identifier of the corresponding computing power node. The computing power node state awareness data refers to the dynamically changed data perceived and reported by the computing power node, such as a load of the computing power node.

The UDR receives the computing power data update request message, obtains the computing power node state awareness data and the computing power node identifier included therein, and updates, based on the computing power node state awareness data, the computing power data corresponding to the computing power node indicated by the computing power node identifier. The UDR further provides a computing power data deletion response message to the first network function, to feed back information about successful deletion of the computing power data.

In an embodiment, in case that the first network function is an SMF, the SMF may transmit a computing power node state awareness request message to the computing power node, requesting computing power node state awareness data of a computing power node. After receiving the request message, the computing power node transmits a computing power node state awareness response message to the UPF, and the computing power node state awareness response message includes computing power node state awareness data and a computing power node identifier.

The UPF receives the computing power node state awareness response message, obtains the computing power node state awareness data and the computing power node identifier included therein, generates computing power data update information based on the computing power node state awareness data and the computing power node identifier, and transmits the computing power data update information to the SMF. The computing power node identifier is unique, that is, the computing power node identifier is the unique identifier of the corresponding computing power node.

The SMF generates a computing power data update request message based on the computing power node identifier in the computing power data update information, and transmits the computing power data update request message to the UDR. The UDR receives the computing power data update request message, obtains the computing power node identifier and the computing power node state awareness data included therein, and updates the computing power data corresponding to the computing power node indicated by the computing power node identifier. The UDR transmits a computing power data update response message to the SMF, to feed back information about successful update.

In the method for computing-network convergence provided in the embodiments of the present application, the UDR updates the computing power data based on the computing power data update request message transmitted from the first network function, which deeply converges the computing power network into the mobile communication network, improves the efficiency of computing power data update, enhances the service capability of the network, and reduces the expenses of computing-network convergence.

In some embodiments, managing the computing power data based on the first message includes:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

In an embodiment, the first network function transmits a computing power data synchronization request message to the UDR, and the computing power data synchronization request message includes a data synchronization range. The data synchronization range indicates the synchronization of computing power data corresponding to a specified computing power node. The UDR receives the computing power data synchronization request message, transmits a computing power data synchronization response message to the first network function, and feeds back the computing power data within the data synchronization range to the first network function to synchronize the data.

For example, the SMF may store and manage computing power data locally, and maintain a local computing power resource pool. The SMF transmits a computing power data synchronization request message to the UDR, and the message carries a data synchronization range indicating the synchronization of computing power data corresponding to a specified computing power node. The UDR carries the computing power data within the data synchronization range in the computing power data synchronization response message, and transmits the response message to the SMF. After receiving the computing power data transmitted from the UDR, the SMF updates the local computing power data to synchronize the data.

In the method for computing-network convergence provided in the embodiments of the present application, the UDR transmits, based on the computing power data synchronization request message transmitted from the first network function, the computing power data within a indicated data synchronization range to the first network function, synchronizing data between the first network function and the UDR, which deeply converges the computing power network into the mobile communication network, improves the efficiency of computing power data synchronization, enhances the service capability of the network, and reduces the expenses of computing-network convergence.

In some embodiments, managing the computing power data based on the first message includes:
obtaining the computing power data query request message included in the first message, where the computing power data query request message includes a query condition; and
transmitting, based on the query condition, computing power data meeting the query condition to the first network function.

In an embodiment, in case that the first network function is an SMF, the computing power management function transmits a computing power request message to the SMF, and the computing power request message carries the computing power demand analyzed and obtained by the computing power management function. The SMF receives the computing power request message and determines the computing power demand.

The SMF selects available computing power data from local storage. In case that the SMF does not have local storage, a computing power data query request message is transmitted to the UDR or the UDM, and the computing power data query request message includes the query condition generated by the computing power demand.

In case that the UDR receives the computing power data query request message, the UDR obtains the query condition included in the request message and queries the available computing power data meeting the condition based on the query condition. The computing power data meeting the query is carried by the computing power data query response message, and the computing power data query response message is transmitted to the first network function.

In case that the UDM receives the computing power data query request message, the UDM queries the available computing power data meeting the query condition from the UDR, and the computing power data meeting the query is transmitted to the first network function.

The query condition is determined based on a parameter of a computing power demand. The UDM may be a UDM of a mobile communication network that has been extended with computing power functions; and the UDM may also be a new network function that may implement both a mobile communication connection function of a UDM function and a function of providing a computing power service.

For example, after obtaining the computing power demand, in case that the SMF does not store computing power data locally, the SMF transmits a computing power data query request message to the UDR, and the computing power data query request message carries the query condition. The UDR receives the request message and queries the available computing power data meeting the computing power demand locally based on the query condition, and then transmits the queried data to the SMF.

For example, after obtaining computing power demands, in case that the SMF does not store computing power data locally, the SMF transmits a computing power data query request message to the UDM, and the computing power data query request message carries a query condition. The UDM receives the request message and transmits the query condition included in the request message to the UDR. The UDR queries available computing power data meeting the query condition locally, and then transmits the queried data to the SMF.

After obtaining the available computing power data, a policy control function (PCF) generates a computing power scheduling policy based on the computing power demand and transmits the computing power scheduling policy to the SMF. The SMF receives the computing power scheduling policy transmitted from the PCF. The SMF generates a computing power route based on the available computing power data and the computing power scheduling policy.

In the method for computing-network convergence provided in the embodiments of the present application, the query condition is obtained based on the computing power data query request message transmitted from the first network function, and the UDR queries available computing power data based on the query condition, or queries available computing power data from the UDR through the UDM. Computing power route is generated based on available computing power data and queried computing power scheduling policy, which deeply converges the computing power network into the mobile communication network, improves the efficiency of computing power data query, enhances the service capability of the network, and reduces the expenses of computing-network convergence.

In some embodiments, the method further includes:
transmitting a second message to the first network function,
the second message includes one or more of the following messages:
   computing power data storage response message;
   computing power data deletion response message;
   computing power data update response message;
   computing power data synchronization response message; or
   computing power data query response message.

In an embodiment, the UDR manages data based on the first message and transmits a second message to the first network function.

The computing power data storage response message is used to feed back, to the first network function, information about successful storage of the computing power data. The computing power data deletion response message is used to feed back, to the first network function, information about successful deletion of the computing power data. The computing power data update response message is used to feed back, to the first network function, information about successful update of the computing power data. The computing power data synchronization response message carries the computing power data to be synchronized between the UDR and the SMF. The computing power data query response message is used to feed back, to the first network function, information about available computing power data meeting the computing power demand.

In some embodiments, the computing power data include one or more types of the following data:
computing power node registration data;
computing power node state awareness data;
computing power service mirror data; or
computing power scheduling policy data.

**In** an embodiment, the computing power data include computing power node registration data, and the computing power node registration data includes the following parameters: device identifier, computing power node indication (used to indicate that the node is a computing power node), computing power node type, computing power size, computing power node location, computing power service deployed on the computing power node, available service time (optional), available service range (optional), etc.

The computing power data include computing power node state awareness data, and the computing power node state awareness data are dynamically changed node data perceived and reported by the computing power node, such as a load of the computing power node.

The computing power data further include computing power service mirror data and computing power scheduling policy data. The computing power scheduling policy includes: a minimum delay policy, an optimal computing power policy, a shortest path policy, and a security policy, etc. The computing power scheduling policy data refer to specific data under the policy, and the data vary based on an actual service demand. The specific policy data are formulated based on an actual demand of a service.

In the method for computing-network convergence provided in the embodiments of the present application, the mobile communication network and the computing power network are deeply converged, each network function may provide both the mobile communication connection service and the computing power service, which improves the capabilities and efficiency of service of the network; and operation and maintenance are in one unified network, the expenses of network operation and maintenance is greatly reduced, saving the investment expenses of independent network construction.

Below are specific examples to further illustrate the method for computing-network convergence provided in the above embodiments.

The converged network function in the following example is obtained in one of the following two ways: extending a network function of a mobile communication network to an enhance network function with converged computing power capabilities; alternatively, by setting up a new network function, providing both mobile communication network connectivity services and computing power services.

The converged network function includes: a converged unified data repository function, a converged access management function, a converged session management function, a converged user plane function, a converged policy control function, a converged unified data management function, and a converged network repository function. New computing power management functions are added to achieve external openness of computing power (for trusted AFs in the core network, computing power service capabilities may be directly opened through computing power management functions, and for untrusted AFs, computing power service capabilities may be opened through network openness functions), as well as to achieve service application demand awareness, operation administration and maintenance (OAM) and other operational and maintenance functions.

### Example I

In case that a mobile terminal UE acts as a computing power node, a converged access management function achieves registration, deregistration, and a state awareness procedure of the computing power node.

FIG. 2 is a first signaling interaction diagram of an example scenario of a method for computing-network convergence according to an embodiment of the present application. As shown in FIG. 2, in case that the mobile terminal UE acts as a computing power node, before the computing power of the node is scheduled, the registration of the computing power node needs to be completed to become a valid computing power node. The steps for registering the computing power node are as follows.

Step 1: the mobile terminal UE, as a computing power node, transmits a computing power node registration request to a converged access management function, carrying the following parameters: device identifier, computing power node indication (used to indicate that the node is a computing power node), computing power node type, computing power size, computing power node location, computing power service deployed on the computing power node, available service time (optional), available service range (optional), etc.

Step 2: after receiving the request, the converged access management function assigns a unique computing power node identifier to the computing power node and feeds back a response to the UE. The response carries the assigned unique computing power node identifier.

Step 3: the converged access management function submits registration data of the computing power node to a converged unified data repository function for data storage.

Step 4: the converged unified data repository function feeds back a success response to the converged unified access management function.

FIG. 3 is a second signaling interaction diagram of an example scenario of a method for computing-network convergence according to an embodiment of the present application. As shown in FIG. 3, the mobile terminal UE has completed the registration of computing power as a computing power node. In case that the UE no longer provides computing power services, the UE may first proceed with deregistration of the computing power node, and the computing power node is no longer scheduled. The steps for deregistering the computing power node are as follows.

Step 1: the mobile terminal UE, as a computing power node, transmits a computing power node deregistration request to the converged access management function, carrying the following parameters: device identifier, unique computing power node identifier, etc.

Step 2: after receiving the request, the converged access management function feeds back, to the UE, a successful deregistration response.

Step 3: the converged access management function requests the converged unified data repository function to delete computing power data of the node. Request parameters include a device identifier, and a unique computing power node identifier, etc.

Step 4: after receiving the request, the unified data repository function deletes, based on the unique computing power node identifier, computing power data corresponding to the identifier, and feeds back a successful data deletion response to the converged access management function.

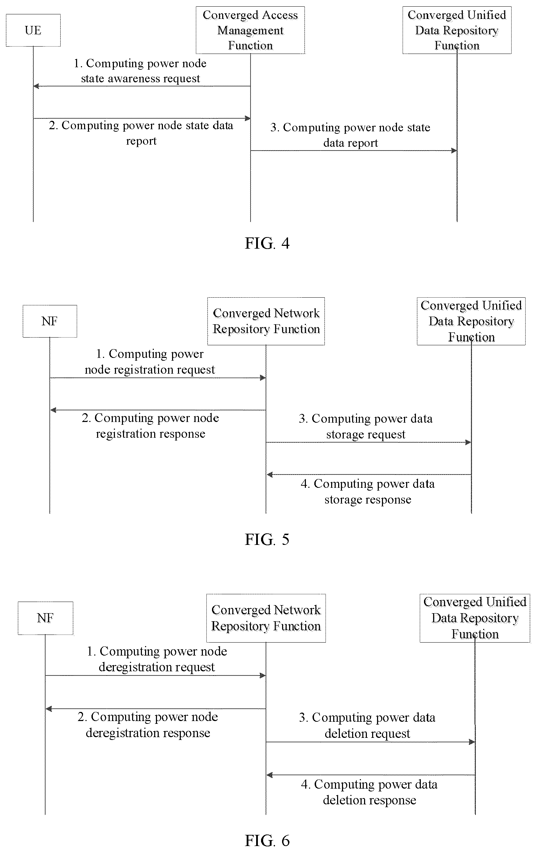

FIG. 4 is a third signaling interaction diagram of an example scenario of a method for computing-network convergence according to an embodiment of the present application. As shown in FIG. 4, after the mobile terminal UE successfully registers as a computing power node, a core network needs to perceive a state of the computing power node in real-time. The steps for computing power node state awareness are as follows.

Step 1: the converged access management function transmits a computing power node state awareness request to the computing power node, carrying a unique computing power node identifier, an awareness resource type (such as computing power service, CPU, GPU, storage, etc.), a resource awareness cycle, and a load of the computing power node, etc.

The reported load of the computing power node is explained as follows:
in case that the awareness resource type is the computing power service, the load of the computing power node includes: a service deployed on the computing power node and a service load (such as a quantity of sessions of the service, etc.);
in case that the awareness resource type is the CPU, the load of the computing power node includes a quantity of used CPUs and a CPU usage rate, etc.;
in case that the awareness resource type is the GPU, the load of the computing power node includes a quantity of used GPUs and GPU usage rate, etc.; and
in case that the awareness resource type is the storage, the load of the computing power node includes used storage capacity and remained storage capacity, etc.

In case of reporting computing power node state awareness data, one or more items of the above data may be included.

Step 2: after receiving the request, the computing power node cyclically reports awareness data based on the awareness cycle in the request (mainly perceiving and reporting dynamically changed data of the node, i.e., the load of the computing power node).

Step 3: the converged access management function forwards the computing power node awareness data to the converged unified data repository function, and the converged unified data repository function cyclically updates the computing power node awareness data.

In case that the converged access management function reports the computing power node awareness data to the converged unified data repository function, different implementation or data reporting ways may be set according to the actual situations, such as the following ways.

Way 1: considering a high real-time requirement for the computing power node state awareness data, it is necessary to strictly ensure the consistency of data on both sides. The converged access management function forwards the received data to the converged unified data repository function in real time, and the converged unified data repository function updates the data.

Way 2: considering the impact of frequent data updates on the converged and unified data repository, a change threshold or an update timer may be set for the reported awareness data. In case that the change in awareness data exceeds the threshold compared to the last reported data, or in case that the update timer expires, the converged access management function forwards the received data to the converged unified data repository function, and the converged unified data repository function updates the data.

### Example II

In case that there is remaining computing power, such as remaining CPU and storage resources, in a mobile core NF, or its own service capabilities, such as location analysis capability of a location management function (LMF), intelligent analysis capability of a network data analytics function (NWDAF), data storage capability of a UDR, etc., need to be opened up as computing power for other applications, this NF may be registered as a computing power node.

In case that the NF serves as a computing power node, a converged network repository function implements registration/deregistration/state awareness of the computing power node, while supporting registration of network functions and services.

FIG. 5 is a fourth signaling interaction diagram of an example scenario of a method for computing-network convergence according to an embodiment of the present application. As shown in FIG. 5, in case that the mobile core NF serves as a computing power node, the node needs to complete the registration of the computing power node before its computing power is scheduled, to become a valid computing power node. The steps for registering a computing power node are as follows.

Step 1: an NF transmits, as a computing power node, a computing power node registration request to a converged network repository function, carrying the following parameters: device identifier, computing power node indication (used to indicate that the node is a computing power node), computing power node type, computing power size, computing power node location, computing power service deployed on the computing power node, available service time (optional), available service range (optional), etc.

Step 2: after receiving the request, the converged network repository function assigns a unique computing power node identifier to the computing power node and feeds back a response to the NF. The response carries the assigned unique computing power node identifier.

Step 3: the converged network repository function submits registration data of the computing power node to a converged unified data repository function for data storage.

Step 4: the converged unified data repository function feeds back a success response to the converged unified network repository function.

FIG. 6 is a fifth signaling interaction diagram of an example scenario of a method for computing-network convergence according to an embodiment of the present application. As shown in FIG. 6, the mobile core NF has completed the registration of computing power as a computing power node. In case that the NF no longer provides computing power services, the NF may first proceed with deregistration of the computing power node, and the computing power node is no longer scheduled. The steps for registering the computing power node are as follows.

Step 1: the mobile core NF, as a computing power node, transmits a computing power node deregistration request to the converged network repository function, carrying the following parameters: device identifier, unique computing power node identifier, etc.

Step 2: after receiving the request, the converged network repository function feeds back a successful deregistration response to the NF.

Step 3: the converged network repository function requests the converged unified data repository function to delete computing power data of the node. Request parameters include a device identifier, and a unique computing power node identifier, etc.

Step 4: after receiving the request, the converged unified data repository function deletes, based on the unique computing power node identifier, computing power data corresponding to the identifier, and feeds back a successful data deletion response to the converged network repository function.

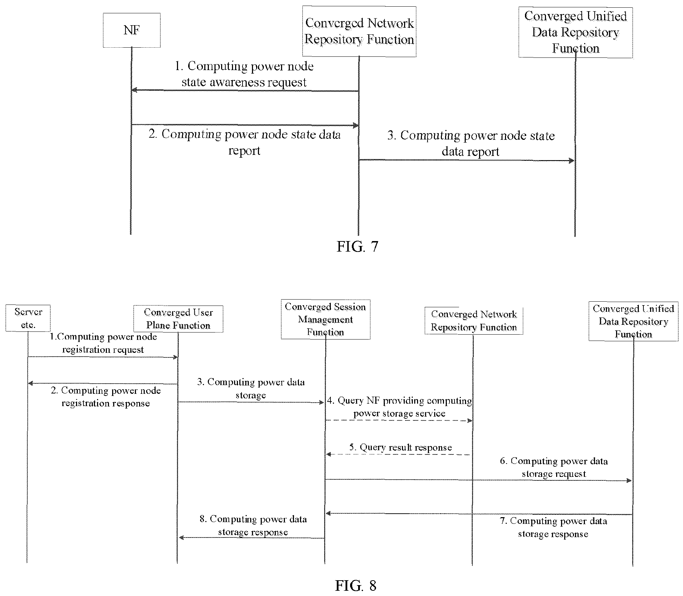

FIG. 7 is a sixth signaling interaction diagram of an example scenario of a method for computing-network convergence according to an embodiment of the present application. As shown in FIG. 7, after the mobile core NF successfully registers as a computing power node, a core network needs to perceive a real-time state of the computing power node. The steps for computing power node state awareness are as follows.

Step 1: the converged network repository function transmits a computing power node state awareness request to the NF, carrying a unique computing power node identifier, an awareness resource type, a resource awareness cycle, and a load of the computing power node, etc. The description of the resource awareness cycle and the load of the computing power node is the same as in Example I.

Step 2: after receiving the request, the computing power node cyclically reports awareness data based on the awareness cycle in the request.

Step 3: the converged network repository function forwards the computing power node awareness data to the converged unified data repository function, and the converged unified data repository function cyclically updates the computing power node awareness data.

In case that the converged network repository function reports the computing power node awareness data to the converged unified data repository function, different implementation or data reporting ways may be set according to the actual situations, such as the following ways.

Way 1: considering a high real-time requirement for the computing power node state awareness data, it is necessary to strictly ensure the consistency of data on both sides. The converged network repository function forwards the received data to the converged unified data repository function in real time, and the converged unified data repository function updates the data.

Way 2: considering the impact of frequent data updates on the converged and unified data repository, a change threshold or an update timer may be set for the reported awareness data. In case that the change in awareness data exceeds the threshold compared to the last reported data, or in case that the update timer expires, the converged network repository function forwards the received data to the converged unified data repository function, and the converged unified data repository function updates the data.

### Example III

In case that a DN, a server, an edge computing platform, and an IDC, etc. are used as computing power nodes, before the computing power of the node is scheduled, the registration of the computing power node needs to be completed to become a valid computing power node. The DN, server, edge computing platform, and IDC, etc. may register a computing power node by a converging the user interface function, which has two ways, including the following.

(1) FIG. 8 is a seventh signaling interaction diagram of an example scenario of a method for computing-network convergence according to an embodiment of the present application. As shown in FIG. 8, registration of a computing power node is achieved through an interface interaction between a converged user interface function and a converged session management function. The steps for registering the computing power node are as follows.

Step 1: a DN, a server, an edge computing platform, or an IDC, etc., transmits, as a computing power node, a computing power node registration request to the converged user interface function through an interface, carrying the following parameters: DN identifier/device identifier, computing power node indication (used to indicate that the node is a computing power node), computing power node type, computing power size, computing power node location, computing power service deployed on the computing power node, available service time (optional), available service range (optional), etc.

Step 2: in case of receiving a message transmitted from the computing power node, the converged user plane function determines that the message type is a computing power node registration message, and the message carries a computing power node indication. The converged user plane function assigns a unique identifier for the computing power node and responds to the computing power node, carrying the assigned unique computing power node identifier.

Step 3: the converged user interface function transmits a computing power data storage request to the converged session management function. In case that the converged user plane function knows a converged unified data repository function requiring to store computing power data, a computing power data forwarding rule is pre-configured in the converged user plane function, and the forwarding rule may include: a computing power node identifier, an identifier of a target converged unified data repository function, and an Internet Protocol (IP) address of the identifier of the target converged unified data repository function. The converged user interface function transmits a computing power data storage request to the converged session management function, and the request includes: a unique identifier of the target converged unified data repository function, the IP address of the identifier of the target converged unified data repository function, a unique computing power node identifier, and the computing power registration data carried in the computing power node registration request in step 1.

Step 4: (optional) in case that the converged user interface function does not know the converged unified data repository function requiring to store computing power data, the computing power data are forwarded to the converged session management function. The converged session management function calls the converged network repository function to query the converged unified data repository function that may provide computing power data storage services.

Step 5: (optional) the converged network repository function feeds back, to the converged session management function, a list of the converged unified data repository functions that may provide computing power data storage services.

Step 6: the converged session management function selects, based on the unique identifier and/or IP address of the target converged unified data repository function in the computing power data storage request transmitted from the converged user plane function, or in the list of converged unified data repository functions feedback from the converged network repository function, a suitable target converged unified data repository function, and forwards the computing power registration data to the determined converged unified data repository function for storage.

Step 7: the converged unified data repository function receives and stores the data, and feeds back a success response to the converged session management function.

Step 8: the converged session management function forwards the computing power data storage success response to the converged user plane function, and the response carries the unique computing power node identifier, device identifier, and the unique identifier of the converged unified data repository function (identifying the converged unified data repository function storing the computing power data).

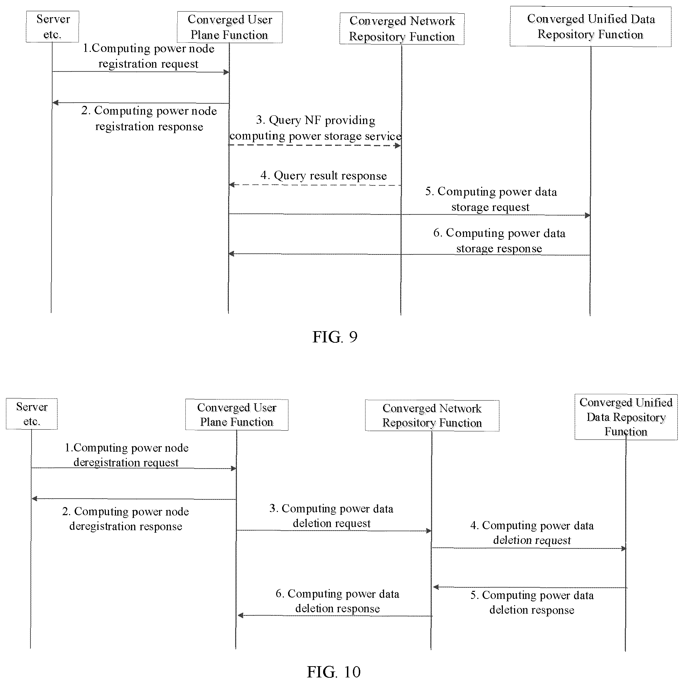

(2) FIG. 9 is an eighth signaling interaction diagram of an example scenario of a method for computing-network convergence according to an embodiment of the present application. As shown in FIG. 9, the registration of the computing power node is achieved through interface interactions of the converged user plane function and the converged unified data repository function. By directly interacting with the service-oriented interface of the converged user plane function and the converged unified data repository function, the signaling procedure between NFs may be simplified and a quantity of signaling interactions between interfaces may be reduced. The steps for registering the computing power node are as follows.

Step 1: a DN, a server, an edge computing platform, or an IDC, etc., transmits, as a computing power node, a computing power node registration request to the converged user interface function through an interface, carrying the following parameters: DN identifier/device identifier, computing power node indication (indicating that the node is a computing power node), computing power node type, computing power size, computing power node location, computing power service deployed on the computing power node, available service time (optional), available service range (optional), etc.

Step 2: in case of receiving a message from the computing power node, the converged user plane function determines that the message type is computing power node registration, and the message carries a computing power node indication. The converged user plane function assigns a unique identifier for the computing power node and transmits a response to the computing power node. The response carries the assigned unique computing power node identifier.

Step 3: (optional) in case that the converged user interface function does not know the converged unified data repository function requiring to store computing power data, the converged user interface function calls the converged network repository function to query the converged unified data repository function that may provide computing power data storage services.

Step 4: (optional) the converged network repository function feeds back, to the converged user interface function, the list of converged unified data repository functions that may provide computing power data storage services.

Step 5: in case that the converged user plane function knows a converged unified data repository function requiring to store computing power data, a computing power data forwarding rule is pre-configured in the converged user plane function, and the forwarding rule may include: a computing power node indication, an identifier of a target converged unified data repository function, and an IP address of the identifier of the target converged unified data repository function. The converged session management function selects, based on the pre-configured unique identifier and/or IP address of the target converged unified data repository function, or in the list of converged unified data repository functions feedback from the converged network repository function, a suitable target converged unified data repository function, and forwards the computing power registration data to the determined converged unified data repository function for storage.

Step 6: the converged unified data repository function receives and stores the data, and feeds back a success response to the converged user plane function.

The DN, server, edge computing platform, or IDC, etc. has completed the registration as a computing power node. In case that the computing power no longer provides computing power services, the computing power may be deregistered, and the computing power node are no longer scheduled after deregistration. The DN, server, edge computing platform, and IDC, etc. may deregister a computing power node by a converging the user interface function, which has two ways, including the following.
(1) FIG. 10 is a ninth signaling interaction diagram of an example scenario of a method for computing-network convergence according to an embodiment of the present application. As shown in FIG. 10, the registration of the computing power node is achieved through the interface interaction between the user interface function and the session management function. The steps for registering the computing power node are as follows.

Step 1: the DN, server, edge computing platform, or IDC, etc. transmits, as a computing power node, a computing power node deregistration request to the converged user interface function through an interface, carrying the following parameters: DN identifier/device identifier, computing power node indication, and computing power node unique identifier, etc.

Step 2: in case of receiving a message transmitted from the computing power node, the converged user interface function determines that the message type is computing power node deregistration, and responds to the computing power node on successful deregistration.

Step 3: the converged user interface function transmits a computing power data deletion request to the converged session management function, and the request includes: a unique identifier of the converged unified data repository function, an IP address of the converged unified data repository function, a DN identifier/device identifier, and a unique computing power node identifier.

Step 4: after receiving the computing power data deletion request from the converged user plane function, the converged session management function forwards the computing power data deletion request to the converged unified data repository function indicated by the unique identifier of the converged unified data repository function and the **IP** address of the converged unified data repository function.

Step 5: after receiving the request, the unified data repository function deletes, based on the unique computing power node identifier, computing power data corresponding to the identifier, and feeds back a successful data deletion response to the converged session management function.

Step 6: the converged session management function forwards a success response on computing power data deletion to the converged user plane function.

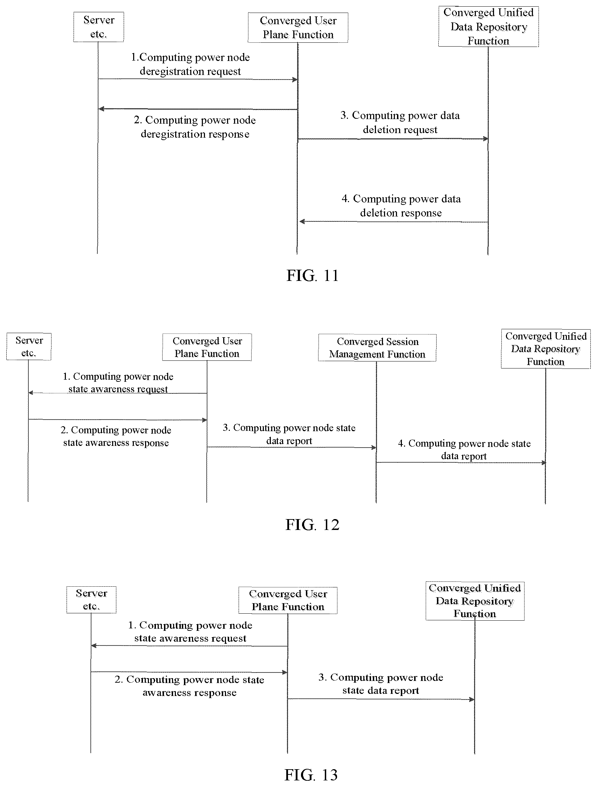

(2) FIG. 11 is a tenth signaling interaction diagram of an example scenario of a method for computing-network convergence according to an embodiment of the present application. As shown in FIG. 11, the deregistration of the computing power node is achieved through interface interactions of the converged user plane function and the converged unified data repository function. By directly interacting with the service-oriented interface of the converged user plane function and the converged unified data repository function, the signaling procedure between NFs may be simplified and a quantity of signaling interactions between interfaces may be reduced. The steps for deregistering the computing power node are as follows.

Step 1: the DN, server, edge computing platform, or IDC, etc. transmits, as a computing power node, a computing power node deregistration request to the converged user interface function through an interface, carrying the following parameters: DN identifier/device identifier, computing power node indication, and computing power node unique identifier, etc.

Step 2: in case of receiving a message transmitted from the computing power node, the converged user interface function determines that the message type is computing power node deregistration, and responds to the computing power node on successful deregistration.

Step 3: the converged user interface function transmits a computing power data deletion request to the converged unified data repository function, and the request includes: a DN identifier/device identifier, and a unique computing power node identifier.

Step 4: after receiving the request, the unified data repository deletes, based on the unique computing power node identifier, computing power data corresponding to the identifier, and provides feedback response to the converged user plane function on successful data deletion.

After the DN, server, edge computing platform, or IDC successfully registers as a computing power node, a core network needs to perceive a real-time state of the computing power node.
(1) FIG. 12 is an eleventh signaling interaction diagram of an example scenario of a method for computing-network convergence according to an embodiment of the present application. As shown in FIG. 12, the steps to achieve state awareness of the computing power node through interface interaction between the converged user plane function and the converged session management function are as follows.

Step 1: the converged user plane function transmits a computing power node state awareness request to the computing power node, and the request carries a unique computing power node identifier, an awareness resource type, a resource awareness cycle, and a load of the computing power node service.

The reported load of the computing power node is explained as follows:
in case that the awareness resource type is the computing power service, the load of the computing power node includes: a service deployed on the computing power node and the service load (such as a quantity of sessions of the service, etc.);
in case that the awareness resource type is the CPU, the load of the computing power node includes a quantity of used CPUs and a CPU usage rate, etc.;
in case that the awareness resource type is the GPU, the load of the computing power node includes a quantity of used GPUs and a GPU usage rate, etc.; and
in case that the awareness resource type is the storage, the load of the computing power node includes used storage capacity and remained storage capacity, etc.

**In** case of reporting computing power node state awareness data, one or more items of the above data may be included.

Step 2: after receiving the request, the computing power node cyclically reports awareness data based on the awareness cycle in the request (mainly perceiving and reporting dynamically changed data of the node, i.e., the load of the computing power node).

Step 3: in case of receiving a message transmitted from the computing power node, the converged user plane function determines that the message type is computing power node state data report. The converged user plane function determines, based on the unique computing power node identifier, the converged unified data repository function where it is located, and transmits a computing power node data report message to the converged session management function. The message includes: a unique identifier of the converged unified data repository function, an **IP** address of the converged unified data repository function, a unique computing power node identifier, and data reported by the computing power node in step 2.

After receiving the computing power node state data report message from the converged user plane function, the converged session management function forwards the computing power node awareness data to the converged unified data repository function indicated by the unique identifier of the converged unified data repository function and the **IP** address of the converged unified data repository function where it is located. The converged unified data repository function cyclically updates the computing power node awareness data.

In case that the converged session management function reports the computing power node awareness data to the converged unified data repository function, different implementation or data reporting ways may be set according to the actual situations, such as the following ways.

Way 1: considering the high real-time requirement for the computing power node state awareness data, it is necessary to strictly ensure the consistency of data on both sides. The converged session management function forwards the received data to the converged unified data repository function in real time, and the converged unified data repository function updates the data.

Way 2: considering the impact of frequent data updates on the converged and unified data repository, a change threshold or update timer may be set for the reported awareness data. In case that the change in awareness data exceeds the threshold compared to the last reported data, or in case that the update timer expires, the converged session management function forwards the received data to the converged unified data repository function, and the converged unified data repository function updates the data.

(2) FIG. 13 is a twelfth signaling interaction diagram of an example scenario of a method for computing-network convergence according to an embodiment of the present application. As shown in FIG. 13, the steps to achieve state awareness of the computing power node through the through interface interactions of the converged user plane function and the converged unified data repository function are as follows.

Step 1: the converged user plane function transmits a computing power node state awareness request to the computing power node, and the request carries a unique computing power node identifier, an awareness resource type (such as computing power service, CPU, GPU, storage, etc.), a resource awareness cycle, and a load of the computing power node service.

The reported load of the computing power node is explained as follows:
in case that the awareness resource type is the computing power service, the load of the computing power node includes: a service deployed on the computing power node and the service load (such as a quantity of sessions of the service, etc.);
in case that the awareness resource type is the CPU, the load of the computing power node includes a quantity of used CPUs and a CPU usage rate, etc.;
in case that the awareness resource type is the GPU, the load of the computing power node includes a quantity of used GPUs and a GPU usage rate, etc.; and
in case that the awareness resource type is the storage, the load of the computing power node includes used storage capacity and remained storage capacity, etc.

In case of reporting computing power node state awareness data, one or more items of the above data may be included.

(2) After receiving the request, the computing power node cyclically reports awareness data based on the awareness cycle in the request (mainly perceiving and reporting dynamically changed data of the node, i.e., the load of the computing power node).

(3) In case of receiving a message transmitted from the computing power node, the converged user plane function determines that the message type is computing power node state data report. The converged user plane function determines, based on the unique computing power node identifier, the converged unified data repository function where it is located, and transmits a computing power node data report message to the converged data repository function. The message includes: a unique identifier of the computing power node, and data reported by the computing power node in step 2. The converged unified data repository function cyclically updates the computing power node awareness data.

In case that the converged user interface function reports the computing power node awareness data to the converged unified data repository function, different implementation or data reporting ways may be set according to the actual situations, such as the following ways.

Way 1: considering the high real-time requirement for the computing power node state awareness data, it is necessary to strictly ensure the consistency of data on both sides. The converged user plane function forwards the received data to the converged unified data repository function in real time, and the converged unified data repository function updates the data.

Way 2: considering the impact of frequent data updates on the converged and unified data repository, a change threshold or update timer may be set for the reported awareness data. In case that the change in awareness data exceeds the threshold compared to the last reported data, or in case that the update timer expires, the converged user plane function forwards the received data to the converged unified data repository function, and the converged unified data repository function updates the data.

In addition, in this example, the core network functions and services provided thereof may be registered/deregistered/updated in the converged network repository function.

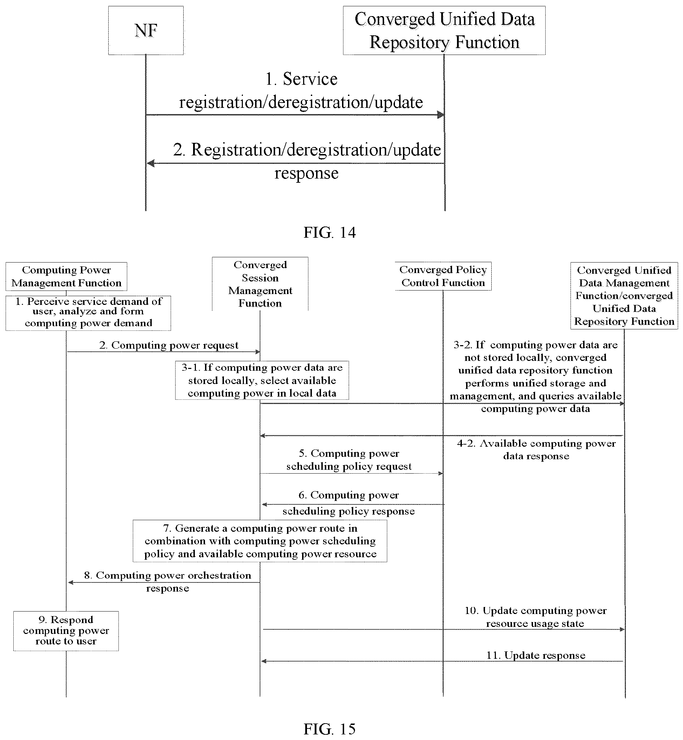

FIG. 14 is a thirteenth signaling interaction diagram of an example scenario of a method for computing-network convergence according to an embodiment of the present application. As shown in FIG. 14, the registered NF and services provided thereof may be discovered by other service users, and other service users may be provided with the services. For example, after registering in the converged network repository, the converged session management function and its computing power data storage service may be discovered by the converged session management function. In case that the registered NF and services provided thereof do not want to be used by other NFs, the deregistration procedure is performed. In case that the services provided by registered NF change, the data stored in the converged network repository function are updated. The steps for NF registration/deregistration/update are as follows.

Step 1: a network function transmits a service registration/deregistration/update request to the converged network repository function.

The registration request carries a network function unique identifier, a network function address, and an available service, etc.; the deregistration request carries the unique network function identifier, and the network function address, etc.; the update request carries the unique network function identifier, the network function address, and a changed service (such as added service list, and deleted service list, etc.).

Step 2: in case of registering the service, the converged network repository function saves the registration data and responds with confirmation information to the network function. In case of deregistering the service, the converged network repository function deletes the NF data and responds with confirmation information to the network function. In case of updating the service, the converged network repository function updates the NF data and responds with confirmation information to the network function. The corresponding converged network repository function needs to synchronize change information with NFs subscribing associated services.

### Example IV

FIG. 15 is a fourteenth signaling interaction diagram of an example scenario of a method for computing-network convergence according to an embodiment of the present application. As shown in FIG. 15, the steps for generating computing power route through the converged session management function are as follows.

Step 1: a computing power management function supports a service demand awareness function, which may perceive a service demand of a user, analyze and form a computing power demand.

Step 2: the computing power management function transmits a computing power request to a converged session management function, and the request carries the analyzed computing power demand. The computing power demand may include the following parameters: a required computing power type, a computing power size, usage time, and a computing power location (optional), etc.

Step 3: available computing power resources are selected, which may be implemented flexibly and diversely, including querying available computing power resources in the converged unified data repository function through a converged unified data management function (steps 3-2, and 4-2), localizing storage and management of computing power data through a converged session management function (step 3-1), or directly querying from the converged unified data repository function (steps 3-2, 4-2).

Step 3-1: in case that the computing power data are stored locally in the converged session management, available computing power resources from the local computing power data are selected based on the analyzed computing power demands. Otherwise, step 3-2 is performed.

Step 3-2: in case that the computing power data are not stored locally in the converged session management and is stored and managed by the converged unified data repository function, the converged session management function receives the request and directly obtain the computing power data from the converged unified data repository function based on the computing power demand parameter in the request, or queries the available computing power resources from the converged unified data repository function through the converged unified data management function.

Step 4-2: the converged unified data repository function management function obtains and feeds back the available computing power resource data meeting the condition to the converged unified data management, or directly feeds back to the converged session management function, including a unique computing power node identifier, an identification identifier, and the computing power capability of the computing power node.

Step 5: the converged session management function uses the computing power demand parameter in the computing power request as a query condition to query a computing power scheduling policy from the converged policy control function. The computing power scheduling policy includes but not limited to: a minimum delay policy, an optimal computing power policy, a shortest path policy, and a security policy, etc. The specific policy data are formulated based on the actual service demand.

Step 6: the converged policy control function obtains and feeds back a computing power scheduling policy meeting the condition.

Step 7: the converged session management function generates a computing power route based on the computing power scheduling policy and an available computing power resource.

Step 8: computing power route information is fed back to the computing power management function, and the route indicates a path for a computing power user to reach an optimal computing power node.

Step 9: the computing power management function feeds back computing power route information to the computing power user. The computing power user accesses, based on the routing information, the computing power node providing computing power services to the computing power user and use the computing power services thereof.

Step 10: after the converged session management function generates the computing power route, the converged session management function feeds back, to the converged unified data management function/converged unified data repository function, the computing power resource update information, to update a usage state of the computing power resource data stored in the converged unified data repository function. In case that the computing power data are stored locally, the converged session management function first updates the usage state of the local data to occupied, and then feeds back, to the converged unified data management function/converged unified data repository function, the computing power resource update.

Step 11: the converged unified data management function/converged unified data repository function updates the usage state of computing power data to occupied, and responds to the converged session management function.

### Example V

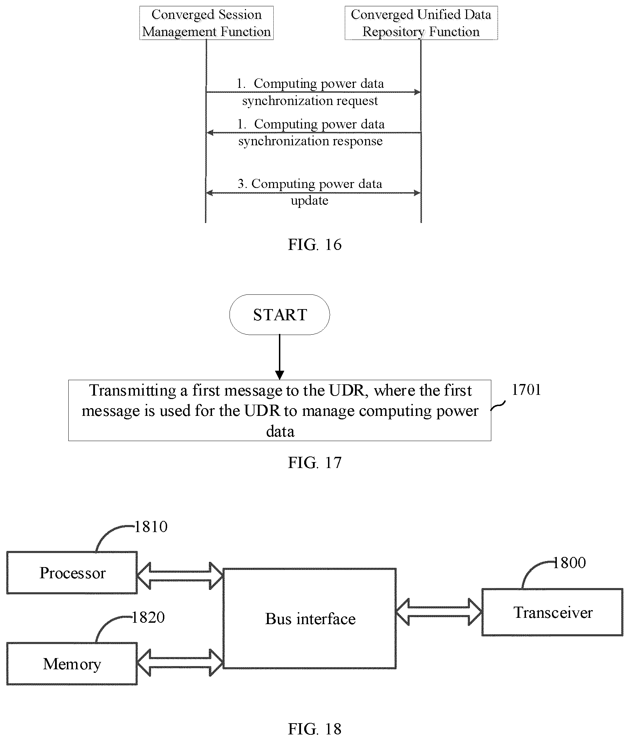

FIG. 16 is a fifteenth signaling interaction diagram of an example scenario of a method for computing-network convergence according to an embodiment of the present application. As shown in FIG. 16, to improve the efficiency of computing power route generation in the converged session management function, the converged session management function may store and manage computing power data locally, and maintain a local computing power resource pool. The steps for localizing the storage of the computing power data through the convergence of session management functions are as follows.

Step 1: the converged session management function requests synchronization of computing power data from the converged unified data repository function, and the request includes a data synchronization range.

Step 2: the converged unified data repository function responds the computing power data within the data synchronization range to the converged session management function (in full capacity way).

Step 3: computing power data update: the converged unified data repository function updates computing power data to the converged session management function (in incremental way) based on changes in computing power node awareness data; alternatively, the converged session management function updates computing power data (in incremental way) to the converged unified data repository function after service orchestration and scheduling based on the local computing power resource pool and after changing the resource occupancy state.

FIG. 17 is a second schematic flowchart of a method for computing-network convergence according to an embodiment of the present application. As shown in FIG. 17, embodiments of the present application provide a method for computing-network convergence, which is performed by a first network function. The method includes the following steps.

Step 1701: transmitting a first message to the UDR, where the first message is used for the UDR to manage computing power data.

In some embodiments, the method further includes:
receiving a third message transmitted from a computing power node; and
generating the first message based on the third message,
the third message includes one or more of the following messages:
   computing power node registration request message;
   computing power node deregistration request message; or
   computing power node state awareness response message.

In some embodiments, generating the first message based on the third message includes:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, generating the first message based on the third message includes:
obtaining the computing power node deregistration request message included in the third message, where the computing power node deregistration request message includes a computing power node identifier; and
generating the first message based on the computing power node identifier.

In some embodiments, generating the first message based on the third message includes:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the method further includes:
receiving a fourth message transmitted from the UPF; and
the fourth message includes one or more types of the following information:
   computing power data storage information;
   computing power data deletion information; or
   computing power data update information.

**In** some embodiments, the method further includes:
transmitting a fifth message to a computing power node; and
the fifth message includes one or more of the following messages:
   computing power node registration response message;
   computing power node deregistration response message; or
   computing power node state awareness request message.

**In** some embodiments, the method further includes:
receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

**In** some embodiments, in case that the first network function is an SMF, the method further includes:
receiving a computing power request message transmitted from a computing power management function, where the computing power management function is used to generate a computing power demand;
determining computing power data and a computing power scheduling policy based on the computing power request message; and
generating a computing power route based on the computing power data and the computing power scheduling policy.

In some embodiments, determining the computing power data and the computing power scheduling policy based on the computing power request message includes:
determining the computing power demand based on the computing power request message;
determining the computing power data based on the computing power demand; and
receiving the computing power scheduling policy transmitted from a policy control function (PCF), where the computing power scheduling policy is determined by the PCF based on the computing power demand.

In some embodiments, determining the computing power data based on the computing power demand includes:
selecting the computing power data from a local database based on the computing power demand.

In some embodiments, determining the computing power data based on the computing power demand includes:
receiving computing power data transmitted from a unified data management (UDM), where the computing power data are determined by the UDM based on the computing power demand.

In some embodiments, determining the computing power data based on the computing power demand includes:
querying and obtaining the computing power data from the UDR based on the computing power demand.

In some embodiments, in case that the first network function is the SMF or the UPF, the method further includes:
transmitting a query request message to the NRF, where the query request message is used to query a network function (NF) providing a computing power data storage service;
receiving a query response message transmitted from the NRF; and
determining the NF providing the computing power data storage service based on the query response message.

In some embodiments, in case that the first network function is the NRF, the method further includes:
receiving a network function (NF) registration request message transmitted from the NF, where the NF registration request message includes NF registration information; and
storing the NF registration information.

In some embodiments, in case that the first network function is the NRF, the method further includes:
receiving a network function (NF) deregistration request message transmitted from the NF, where the NF deregistration request message includes NF indication information; and
deleting NF registration information indicated by the NF indication information.

In some embodiments, in case that the first network function is the NRF, the method further includes:
receiving a network function (NF) update request message transmitted from the NF, where the NF update request message includes NF indication information; and
updating NF registration information indicated by the NF indication information.

The method for computing-network convergence provided in the embodiments of the present application may refer to the embodiments of the method for computing-network convergence performed by the UDR, and may achieve the same technical effect. Therefore, the same parts and beneficial effects as the corresponding method embodiments in this embodiment are not repeated here.

FIG. 18 is a schematic structural diagram of a unified data repository (UDR) according to an embodiment of the present application. As shown in FIG. 18, the terminal includes a memory 1820, a transceiver 1800, and a processor 1810, where
the memory 1820 is used for storing a computer program; the transceiver 1800 is used for receiving and transmitting data under control of the processor; and the processor 1810 is used for reading the computer program in the memory and performing the following operations:
receiving a first message transmitted from a first network function; and
managing computing power data based on the first message.

In an embodiment, the transceiver 1800 is used to receive and transmit data under control of the processor 1810.

In FIG. 18, a bus architecture may include any number of interconnected buses and bridges, which are linked together through various circuits of one or more processors represented by the processor 1810 and one or more memories represented by the memory 1820. The bus architecture may also link together various other circuits, such as peripherals, voltage regulators, and power management circuits, which are well known in the art, and therefore are not further described in the present application. The bus interface provides an interface. The transceiver 1800 may be multiple elements, i.e., including a transmitter and a receiver, units for providing communication with various other devices over transmission media including wireless channels, wired channels, fiber optic cables, and the like. For different user equipment, the user interface 1830 may also be an interface capable of externally or internally connecting the required equipment, and the connected equipment includes, but not limited to, a keypad, a display, a speaker, a microphone, a joystick, and the like.

The processor 1810 is responsible for managing the bus architecture and general processing, and the memory 1820 may store data used by the processor 1810 when performing operations.

In some embodiments, processor 1810 may be a central processing unit (CPU), an application specific integrated circuit (ASIC), a field-programmable gate array (FPGA), or a complex programmable logic device (CPLD), and the processor may also adopt a multi-core architecture.

The processor uses a computer program stored in the memory to perform any of the methods provided in embodiments of the present application according to obtained executable instructions. The processor and memory may also be physically separated and arranged separately.

In some embodiments, the processor is further used for reading the computer program from the memory and performing the following operations:
obtaining the computing power data storage request message included in the first message, where the computing power data storage request message includes computing power data; and
storing the computing power data.

**In** some embodiments, the processor is further used for reading the computer program from the memory and performing the following operations:
obtaining the computing power data deletion request message included in the first message, where the computing power data deletion request message includes a computing power node identifier; and
deleting computing power data corresponding to a computing power node indicated by the computing power node identifier.

**In** some embodiments, the processor is further used for reading the computer program from the memory and performing the following operations:
obtaining the computing power data update request message included in the first message, where the computing power data update request message includes a computing power node identifier and target computing power data; and
updating computing power data corresponding to a computing power node indicated by the computing power node identifier to the target computing power data.

**In** some embodiments, the processor is further used for reading the computer program from the memory and performing the following operations:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

**In** some embodiments, the processor is further used for reading the computer program from the memory and performing the following operations:
obtaining the computing power data query request message included in the first message, where the computing power data query request message includes a query condition; and
transmitting, based on the query condition, computing power data meeting the query condition to the first network function.

In some embodiments, the processor is further used for reading the computer program from the memory and performing the following operations:
transmitting a second message to the first network function,
the second message includes one or more of the following messages:
   computing power data storage response message;
   computing power data deletion response message;
   computing power data update response message;
   computing power data synchronization response message; or
   computing power data query response message.

It should be noted that the UDR provided in the embodiments of the present application may achieve all the method steps implemented by the method embodiment performed by the UDR, and may achieve the same technical effects. Therefore, specific descriptions of the parts and beneficial effects that are the same as those in this embodiment are not repeated here.

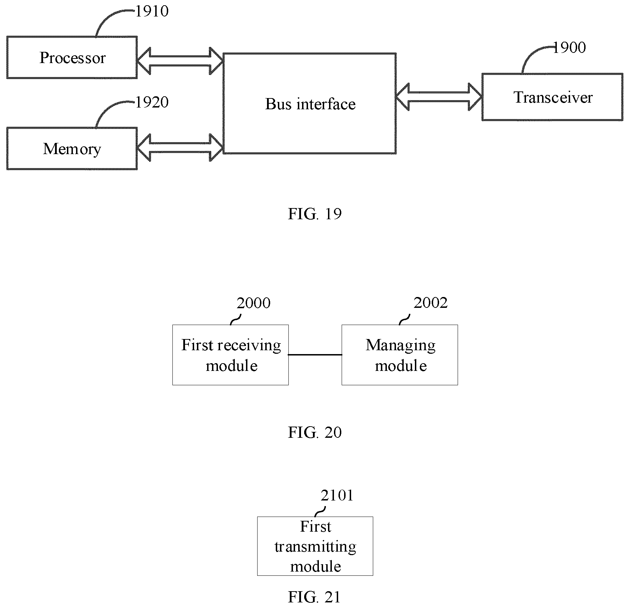

FIG. 19 is a schematic structural diagram of a first network function according to an embodiment of the present application. As shown in FIG. 19, the network device includes a memory 1920, a transceiver 1900, and a processor 1910, where
the memory 1920 is used for storing a computer program; the transceiver 1900 is used for transmitting and receiving data under control of the processor 1910; and the processor 1910 is used for reading the computer program from the memory 1920 and performing the following operations:
transmitting a first message to a unified data repository (UDR), where the first message is used for the UDR to manage computing power data.

In an embodiment, the transceiver 1900 is used to receive and transmit data under control of the processor 1910.

In FIG. 19, a bus architecture may include any number of interconnected buses and bridges, which are linked together through various circuits of one or more processors represented by the processor 1910 and one or more memories represented by the memory 1920. The bus architecture may also link together various other circuits, such as peripherals, voltage regulators, and power management circuits, which are well known in the art, and therefore are not further described in the present application. The bus interface provides an interface. The transceiver 1900 may be multiple elements, i.e., including a transmitter and a receiver, units for providing communication with various other devices over transmission media including wireless channels, wired channels, fiber optic cables, and the like. The processor 1910 is responsible for managing the bus architecture and general processing, and the memory 1920 may store data used by the processor 1910 when performing operations.

The processor 1910 may be a central processing unit (CPU), an application specific integrated circuit (ASIC), a field-programmable gate array (FPGA), or a complex programmable logic device (CPLD), and the processor may also adopt a multi-core architecture.

In some embodiments, the processor is further used for reading the computer program from the memory and performing the following operations:
receiving a third message transmitted from a computing power node; and
generating the first message based on the third message,
the third message includes one or more of the following messages:
   computing power node registration request message;
   computing power node deregistration request message; or
   computing power node state awareness response message.

In some embodiments, the processor is further used for reading the computer program from the memory and performing the following operations:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, the processor is further used for reading the computer program from the memory and performing the following operations:
obtaining the computing power node deregistration request message included in the third message, where the computing power node deregistration request message includes a computing power node identifier; and
generating the first message based on the computing power node identifier.

In some embodiments, the processor is further used for reading the computer program from the memory and performing the following operations:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the processor is further used for reading the computer program from the memory and performing the following operations:
receiving a fourth message transmitted from the UPF; and
the fourth message includes one or more types of the following information:
   computing power data storage information;
   computing power data deletion information; or
   computing power data update information.

**In** some embodiments, the processor is further used for reading the computer program from the memory and performing the following operations:
transmitting a fifth message to a computing power node; and
the fifth message includes one or more of the following messages:
   computing power node registration response message;
   computing power node deregistration response message; or
   computing power node state awareness request message.

**In** some embodiments, the processor is further used for reading the computer program from the memory and performing the following operations:
receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

In some embodiments, in case that the first network function is the SMF, the processor is further used for reading the computer program from the memory and performing the following operations:
receiving a computing power request message transmitted from a computing power management function, where the computing power management function is used to generate a computing power demand;
determining computing power data and a computing power scheduling policy based on the computing power request message; and
generating a computing power route based on the computing power data and the computing power scheduling policy.

In some embodiments, the processor is further used for reading the computer program from the memory and performing the following operations:
determining the computing power demand based on the computing power request message;
determining the computing power data based on the computing power demand; and
receiving the computing power scheduling policy transmitted from a policy control function (PCF), where the computing power scheduling policy is determined by the PCF based on the computing power demand.

In some embodiments, the processor is further used for reading the computer program from the memory and performing the following operations:
selecting the computing power data from a local database based on the computing power demand.

In some embodiments, the processor is further used for reading the computer program from the memory and performing the following operations:
receiving computing power data transmitted from a unified data management (UDM), where the computing power data are determined by the UDM based on the computing power demand.

In some embodiments, the processor is further used for reading the computer program from the memory and performing the following operations:
querying and obtaining the computing power data from the UDR based on the computing power demand.

In some embodiments, in case that the first network function is the SMF or the UPF, the processor is further used for reading the computer program from the memory and performing the following operations:
transmitting a query request message to the NRF, where the query request message is used to query a network function (NF) providing a computing power data storage service;
receiving a query response message transmitted from the NRF; and
determining the NF providing the computing power data storage service based on the query response message.

In some embodiments, in case that the first network function is the NRF, the processor is further used for reading the computer program from the memory and performing the following operations:
receiving a network function (NF) registration request message transmitted from the NF, where the NF registration request message includes NF registration information; and
storing the NF registration information.

In some embodiments, in case that the first network function is the NRF, the processor is further used for reading the computer program from the memory and performing the following operations:
receiving a network function (NF) deregistration request message transmitted from the NF, where the NF deregistration request message includes NF indication information; and
deleting NF registration information indicated by the NF indication information.

In some embodiments, in case that the first network function is the NRF, the processor is further used for reading the computer program from the memory and performing the following operations:
receiving a network function (NF) update request message transmitted from the NF, where the NF update request message includes NF indication information; and
updating NF registration information indicated by the NF indication information.

In an embodiment, the first network function provided in the embodiments of the present application may achieve all the method steps implemented by the method embodiment performed by the first network function, and may achieve the same technical effect. Therefore, the same parts and beneficial effects as the method embodiment in this embodiment are not repeated here.

FIG. 20 is a first schematic structural diagram of an apparatus for computing-network convergence according to an embodiment of the present application. As shown in FIG. 20, the embodiments of the present application provide an apparatus for computing-network convergence, including a first receiving module 2001 and a managing module 2002, where
the first receiving module 2001 is used for receiving a first message transmitted from a first network function; and
the managing module 2002 is used for managing computing power data based on the first message.

**In** some embodiments, the managing module is further used for:
obtaining the computing power data storage request message included in the first message, where the computing power data storage request message includes computing power data; and
storing the computing power data.

**In** some embodiments, the managing module is further used for:
obtaining the computing power data deletion request message included in the first message, where the computing power data deletion request message includes a computing power node identifier; and
deleting computing power data corresponding to a computing power node indicated by the computing power node identifier.

In some embodiments, the managing module is further used for:
obtaining the computing power data update request message included in the first message, where the computing power data update request message includes a computing power node identifier and target computing power data; and
updating computing power data corresponding to a computing power node indicated by the computing power node identifier to the target computing power data.

In some embodiments, the managing module is further used for:
obtaining the computing power data synchronization request message included in the first message, where the computing power data synchronization request message includes synchronization range indication information; and
transmitting, based on the synchronization range indication information, computing power data within a synchronization range indicated by the synchronization range indication information to the first network function.

In some embodiments, the managing module is further used for:
obtaining the computing power data query request message included in the first message, where the computing power data query request message includes a query condition; and
transmitting, based on the query condition, computing power data meeting the query condition to the first network function.

In some embodiments, the apparatus further includes a second transmitting module, where
the second transmitting module is used for transmitting a second message to the first network function,
the second message includes one or more of the following messages:
   computing power data storage response message;
   computing power data deletion response message;
   computing power data update response message;
   computing power data synchronization response message; or
   computing power data query response message.

In an embodiment, the above-mentioned apparatus for computing-network convergence provided in the embodiments of the present application may achieve all the method steps implemented by the method embodiment performed by the UDR, and may achieve the same technical effects. Therefore, the same parts and beneficial effects as the method embodiment in this embodiment are not repeated here.

FIG. 21 is a second schematic structural diagram of an apparatus for computing-network convergence according to an embodiment of the present application. As shown in FIG. 21, the embodiments of the present application provide an apparatus for computing-network convergence, including a first transmitting module 2101.

The first transmitting module 2101 is used for transmitting a first message to a unified data repository (UDR), where the first message is used for the UDR to manage computing power data.

In some embodiments, the apparatus further includes:
a second receiving module, used for receiving a third message transmitted from a computing power node; and
a first generating module, used for generating the first message based on the third message,
the third message includes one or more of the following messages:
   computing power node registration request message;
   computing power node deregistration request message; or
   computing power node state awareness response message.

In some embodiments, the first generating module is further used for:
obtaining the computing power node registration request message included in the third message, where the computing power node registration request message includes computing power data of the computing power node;
generating a computing power node identifier for the computing power node; and
generating the first message based on the computing power data and the computing power node identifier.

In some embodiments, the first generating module is further used for:
obtaining the computing power node deregistration request message included in the third message, where the computing power node deregistration request message includes a computing power node identifier; and
generating the first message based on the computing power node identifier.

In some embodiments, the first generating module is further used for:
obtaining the computing power node state awareness response message included in the third message, where the computing power node state awareness response message includes computing power node state awareness data and a computing power node identifier; and
generating the first message based on the computing power node state awareness data and the computing power node identifier.

In some embodiments, the apparatus further includes:
a third receiving module, used for receiving a fourth message transmitted from the UPF; and
the fourth message includes one or more types of the following information:
   computing power data storage information;
   computing power data deletion information; or
   computing power data update information.

In some embodiments, the apparatus further includes:
a third transmitting module, used for transmitting a fifth message to a computing power node; and
the fifth message includes one or more of the following messages:
   computing power node registration response message;
   computing power node deregistration response message; or
   computing power node state awareness request message.

In some embodiments, the apparatus further includes:
a fourth receiving module, used for receiving a second message transmitted from the UDR; and
the second message includes one or more of the following messages:
   computing power data storage response message;
   computing power data deletion response message;
   computing power data update response message;
   computing power data synchronization response message; or
   computing power data query response message.

In some embodiments, in case that the first network function is the SMF, the apparatus further includes:
a fifth receiving module, used for receiving a computing power request message transmitted from a computing power management function, where the computing power management function is used to generate a computing power demand;
a first determining module, used for determining computing power data and a computing power scheduling policy based on the computing power request message; and
a second generating module, used for generating a computing power route based on the computing power data and the computing power scheduling policy.

In some embodiments, the first determining module further includes:
a first determining unit, used for determining the computing power demand based on the computing power request message;
a second determining unit, used for determining the computing power data based on the computing power demand; and
a receiving unit, used for receiving the computing power scheduling policy transmitted from a policy control function (PCF), where the computing power scheduling policy is determined by the PCF based on the computing power demand.

In some embodiments, the second determining unit is further used for:
selecting the computing power data from a local database based on the computing power demand.

In some embodiments, the second determining unit is further used for:
receiving computing power data transmitted from a unified data management (UDM), where the computing power data are determined by the UDM based on the computing power demand.

In some embodiments, the second determining unit is further used for:
querying and obtaining the computing power data from the UDR based on the computing power demand.

In some embodiments, in case that the first network function is the SMF or the UPF, the apparatus further includes:
a fourth transmitting module, used for transmitting a query request message to the NRF, where the query request message is used to query a network function (NF) providing a computing power data storage service;
a sixth receiving module, used for receiving a query response message transmitted from the NRF; and
a second determining module, used for determining the NF providing the computing power data storage service based on the query response message.

In some embodiments, in case that the first network function is the NRF, the apparatus further includes:
a seventh receiving module, used for receiving a network function (NF) registration request message transmitted from the NF, where the NF registration request message includes NF registration information; and
a storing module, used for storing the NF registration information.

In some embodiments, in case that the first network function is the NRF, the apparatus further includes:
an eighth receiving module, used for receiving a network function (NF) deregistration request message transmitted from the NF, where the NF deregistration request message includes NF indication information; and
a deleting module, used for deleting NF registration information indicated by the NF indication information.

In some embodiments, in case that the first network function is the NRF, the apparatus further includes:
a ninth receiving module, used for receiving a network function (NF) update request message transmitted from the NF, where the NF update request message includes NF indication information; and
an updating module, used for updating NF registration information indicated by the NF indication information.

In an embodiment, the above-mentioned apparatus for computing-network convergence provided in the embodiments of the present application may achieve all method steps implemented by the method embodiment performed by the first network function, and may achieve the same technical effects. Therefore, the same parts and beneficial effects as the method embodiment in this embodiment are not repeated here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as flash disk, mobile hard disk, read-only memory (ROM), random access memory (RAM), magnetic disk, or a compact disk.

In some embodiments, a computer-readable storage medium is further provided, where the computer-readable storage medium stores a computer program for causing a computer to perform the method for computing-network convergence provided in the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not repeated here.

It should be noted that: the computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Additionally, it should be noted that: the terms "first", "second", etc. in the embodiments of the present application are used to distinguish similar objects and are not used to describe a specific order or sequence. It should be understood that the terms used in this way may be interchanged in appropriate circumstances, so that the embodiments of the present application may be implemented in order other than those illustrated or described herein, and the objects distinguished by "first" and "second" are usually of the same class, without limiting a quantity of objects, for example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially a 5th Generation Mobile Communication Technology (5G) system. For example, applicable systems may be a global system of mobile communication (GSM) system, a code division multiple access (CDMA) system, a wideband code division multiple access (WCDMA), a general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a handheld device with a wireless connection function, or other processing device connected to a wireless modem. In different systems, names of the terminal device may be different. For example, in the 5G system, the terminal device may be called as a user equipment (UE). A wireless terminal device may communicate with one or more core networks (CNs) via a radio access network (RAN), and the radio terminal device may be a mobile terminal, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for computing-network convergence performed by a unified data repository (UDR), comprising:
receiving a first message transmitted from a first network function; and
managing computing power data based on the first message,
wherein the first network function comprises one or more types of the following network functions:
access and mobility management function (AMF);
network repository function (NRF);
session management function (SMF); or
user plane function (UPF).

2. The method of claim 1, wherein the first message comprises one or more of the following messages:
computing power data storage request message;
computing power data deletion request message;
computing power data update request message;
computing power data synchronization request message; or
computing power data query request message.

3. The method of claim 2, wherein managing the computing power data based on the first message comprises:
obtaining the computing power data storage request message comprised in the first message, wherein the computing power data storage request message comprises computing power data; and
storing the computing power data.

4. The method of claim 2, wherein managing the computing power data based on the first message comprises:
obtaining the computing power data deletion request message comprised in the first message, wherein the computing power data deletion request message comprises a computing power node identifier; and
deleting computing power data corresponding to a computing power node indicated by the computing power node identifier.

5. The method of claim 2, wherein managing the computing power data based on the first message comprises:
obtaining the computing power data update request message comprised in the first message, wherein the computing power data update request message comprises a computing power node identifier and target computing power data; and
updating computing power data corresponding to a computing power node indicated by the computing power node identifier to the target computing power data.

6. The method of claim 2, wherein managing the computing power data based on the first message comprises:
obtaining the computing power data synchronization request message comprised in the first message, wherein the computing power data synchronization request message comprises synchronization range indication information; and
transmitting, based on the synchronization range indication information, computing power data within a synchronization range indicated by the synchronization range indication information to the first network function.

7. The method of claim 2, wherein managing the computing power data based on the first message comprises:
obtaining the computing power data query request message comprised in the first message, wherein the computing power data query request message comprises a query condition; and
transmitting, based on the query condition, computing power data meeting the query condition to the first network function.

8. The method of claim 1, further comprising:
transmitting a second message to the first network function,
wherein the second message comprises one or more of the following messages:
computing power data storage response message;
computing power data deletion response message;
computing power data update response message;
computing power data synchronization response message; or
computing power data query response message.

9. The method of any of claims 1 to 8, wherein the computing power data comprise one or more types of the following data:
computing power node registration data;
computing power node state awareness data;
computing power service mirror data; or
computing power scheduling policy data.

10. A method for computing-network convergence performed by a first network function, comprising:
transmitting a first message to a unified data repository (UDR), wherein the first message is used for the UDR to manage computing power data; and
wherein the first network function comprises one or more types of the following network functions:
access and mobility management function (AMF);
network repository function (NRF);
session management function (SMF); or
user plane function (UPF).

11. The method of claim 10, wherein the first message comprises one or more of the following messages:
computing power data storage request message;
computing power data deletion request message;
computing power data update request message;
computing power data synchronization request message; or
computing power data query request message.

12. The method of claim 11, further comprising:
receiving a third message transmitted from a computing power node; and
generating the first message based on the third message,
wherein the third message comprises one or more of the following messages:
computing power node registration request message;
computing power node deregistration request message; or
computing power node state awareness response message.

13. The method of claim 12, wherein generating the first message based on the third message comprises:
obtaining the computing power node registration request message comprised in the third message, wherein the computing power node registration request message comprises computing power data of the computing power node;
generating a computing power node identifier for the computing power node; and
generating the first message based on the computing power data and the computing power node identifier.

14. The method of claim 12, wherein generating the first message based on the third message comprises:
obtaining the computing power node deregistration request message comprised in the third message, wherein the computing power node deregistration request message comprises a computing power node identifier; and
generating the first message based on the computing power node identifier.

15. The method of claim 12, wherein generating the first message based on the third message comprises:
obtaining the computing power node state awareness response message comprised in the third message, wherein the computing power node state awareness response message comprises computing power node state awareness data and a computing power node identifier; and
generating the first message based on the computing power node state awareness data and the computing power node identifier.

16. The method of claim 10, further comprising:
receiving a fourth message transmitted from the UPF; and
the fourth message comprises one or more types of the following information:
computing power data storage information;
computing power data deletion information; or
computing power data update information.

17. The method of claim 11, further comprising:
transmitting a fifth message to a computing power node; and
the fifth message comprises one or more of the following messages:
computing power node registration response message;
computing power node deregistration response message; or
computing power node state awareness request message.

18. The method of claim 11, further comprising:
receiving a second message transmitted from the UDR; and
wherein the second message comprises one or more of the following messages:
computing power data storage response message;
computing power data deletion response message;
computing power data update response message;
computing power data synchronization response message; or
computing power data query response message.

19. The method of claim 11, wherein in case that the first network function is an SMF, the method further comprises:
receiving a computing power request message transmitted from a computing power management function, wherein the computing power management function is used to generate a computing power demand;
determining computing power data and a computing power scheduling policy based on the computing power request message; and
generating a computing power route based on the computing power data and the computing power scheduling policy.

20. The method of claim 19, wherein determining the computing power data and the computing power scheduling policy based on the computing power request message comprises:
determining the computing power demand based on the computing power request message;
determining the computing power data based on the computing power demand; and
receiving the computing power scheduling policy transmitted from a policy control function (PCF), wherein the computing power scheduling policy is determined by the PCF based on the computing power demand.

21. The method of claim 20, wherein determining the computing power data based on the computing power demand comprises:
selecting, based on the computing power demand, the computing power data from a local database.

22. The method of claim 20, wherein determining the computing power data based on the computing power demand comprises:
receiving computing power data transmitted from a unified data management (UDM), wherein the computing power data are determined by the UDM based on the computing power demand.

23. The method of claim 20, wherein determining the computing power data based on the computing power demand comprises:
querying and obtaining the computing power data from the UDR based on the computing power demand.

24. The method of claim 11, wherein in case that the first network function is the SMF or the UPF, the method further comprises:
transmitting a query request message to the NRF, wherein the query request message is used to query a network function (NF) providing a computing power data storage service;
receiving a query response message transmitted from the NRF; and
determining the NF providing the computing power data storage service based on the query response message.

25. The method of claim 11, wherein in case that the first network function is the NRF, the method further comprises:
receiving a network function (NF) registration request message transmitted from an NF, wherein the NF registration request message comprises NF registration information; and
storing the NF registration information.

26. The method of claim 11, wherein in case that the first network function is the NRF, the method further comprises:
receiving a network function (NF) deregistration request message transmitted from an NF, wherein the NF deregistration request message comprises NF indication information; and
deleting NF registration information indicated by the NF indication information.

27. The method of claim 11, wherein in case that the first network function is the NRF, the method further comprises:
receiving a network function (NF) update request message transmitted from an NF, wherein the NF update request message comprises NF indication information; and
updating NF registration information indicated by the NF indication information.

28. The method of any of claims 10 to 27, wherein the computing power data comprise one or more types of the following data:
computing power node registration data;
computing power node state awareness data;
computing power service mirror data; or
computing power scheduling policy data.

29. A unified data repository (UDR), comprising a memory, a transceiver, and a processor, wherein
the memory is used for storing a computer program; the transceiver is used for receiving and transmitting data under control of the processor; and the processor is used for reading the computer program in the memory and performing the following operations:
receiving a first message transmitted from a first network function; and
managing computing power data based on the first message,
wherein the first network function comprises one or more types of the following network functions:
access and mobility management function (AMF);
network repository function (NRF);
session management function (SMF); or
user plane function (UPF).

30. The UDR of claim 29, wherein the first message comprises one or more of the following messages:
computing power data storage request message;
computing power data deletion request message;
computing power data update request message;
computing power data synchronization request message; or
computing power data query request message.

31. The UDR of claim 30, wherein managing the computing power data based on the first message comprises:
obtaining the computing power data storage request message comprised in the first message, wherein the computing power data storage request message comprises computing power data; and
storing the computing power data.

32. The UDR of claim 30, wherein managing the computing power data based on the first message comprises:
obtaining the computing power data deletion request message comprised in the first message, wherein the computing power data deletion request message comprises a computing power node identifier; and
deleting computing power data corresponding to a computing power node indicated by the computing power node identifier.

33. The UDR of claim 30, wherein managing the computing power data based on the first message comprises:
obtaining the computing power data update request message comprised in the first message, wherein the computing power data update request message comprises a computing power node identifier and target computing power data; and
updating computing power data corresponding to a computing power node indicated by the computing power node identifier to the target computing power data.

34. The UDR of claim 30, wherein managing the computing power data based on the first message comprises:
obtaining the computing power data synchronization request message comprised in the first message, wherein the computing power data synchronization request message comprises synchronization range indication information; and
transmitting, based on the synchronization range indication information, computing power data within a synchronization range indicated by the synchronization range indication information to the first network function.

35. The UDR of claim 30, wherein managing the computing power data based on the first message comprises:
obtaining the computing power data query request message comprised in the first message, wherein the computing power data query request message comprises a query condition; and
transmitting, based on the query condition, computing power data meeting the query condition to the first network function.

36. The UDR of claim 29, wherein the processor is further used for reading the computer program from the memory and performing the following operations:
transmitting a second message to the first network function,
wherein the second message comprises one or more of the following messages:
computing power data storage response message;
computing power data deletion response message;
computing power data update response message;
computing power data synchronization response message; or
computing power data query response message.

37. The UDR of any of claims 29 to 36, wherein the computing power data comprise one or more types of the following data:
computing power node registration data;
computing power node state awareness data;
computing power service mirror data; or
computing power scheduling policy data.

38. A first network function comprising a memory, a transceiver, and a processor, wherein the memory is used for storing a computer program; the transceiver is used for receiving and transmitting data under control of the processor; and the processor is used for reading the computer program in the memory and performing the following operations:
transmitting a first message to a unified data repository (UDR), wherein the first message is used for the UDR to manage computing power data; and
wherein the first network function comprises one or more types of the following network functions:
access and mobility management function (AMF);
network repository function (NRF);
session management function (SMF); or
user plane function (UPF).

39. The first network function of claim 38, wherein the first message comprises one or more of the following messages:
computing power data storage request message;
computing power data deletion request message;
computing power data update request message;
computing power data synchronization request message; or
computing power data query request message.

40. The first network function of claim 39, wherein the processor is further used for reading the computer program from the memory and performing the following operations:
receiving a third message transmitted from a computing power node; and
generating the first message based on the third message,
wherein the third message comprises one or more of the following messages:
computing power node registration request message;
computing power node deregistration request message; or
computing power node state awareness response message.

41. The first network function of claim 40, wherein generating the first message based on the third message comprises:
obtaining the computing power node registration request message comprised in the third message, wherein the computing power node registration request message comprises computing power data of the computing power node;
generating a computing power node identifier for the computing power node; and
generating the first message based on the computing power data and the computing power node identifier.

42. The first network function of claim 40, wherein generating the first message based on the third message comprises:
obtaining the computing power node deregistration request message comprised in the third message, wherein the computing power node deregistration request message comprises a computing power node identifier; and
generating the first message based on the computing power node identifier.

43. The first network function of claim 40, wherein generating the first message based on the third message comprises:
obtaining the computing power node state awareness response message comprised in the third message, wherein the computing power node state awareness response message comprises computing power node state awareness data and a computing power node identifier; and
generating the first message based on the computing power node state awareness data and the computing power node identifier.

44. The first network function of claim 38, wherein the processor is further used for reading the computer program from the memory and performing the following operations:
receiving a fourth message transmitted from the UPF; and
the fourth message comprises one or more types of the following information:
computing power data storage information;
computing power data deletion information; or
computing power data update information.

45. The first network function of claim 39, wherein the processor is further used for reading the computer program from the memory and performing the following operations:
transmitting a fifth message to a computing power node; and
the fifth message comprises one or more of the following messages:
computing power node registration response message;
computing power node deregistration response message; or
computing power node state awareness request message.

46. The first network function of claim 39, wherein the processor is further used for reading the computer program from the memory and performing the following operations:
receiving a second message transmitted from the UDR; and
wherein the second message comprises one or more of the following messages:
computing power data storage response message;
computing power data deletion response message;
computing power data update response message;
computing power data synchronization response message; or
computing power data query response message.

47. The first network function of claim 39, wherein in case that the first network function is the SMF, the processor is further used for reading the computer program from the memory and performing the following operations:
receiving a computing power request message transmitted from a computing power management function, wherein the computing power management function is used to generate a computing power demand;
determining computing power data and a computing power scheduling policy based on the computing power request message; and
generating a computing power route based on the computing power data and the computing power scheduling policy.

48. The first network function of claim 47, wherein determining the computing power data and the computing power scheduling policy based on the computing power request message comprises:
determining the computing power demand based on the computing power request message;
determining the computing power data based on the computing power demand; and
receiving the computing power scheduling policy transmitted from a policy control function (PCF), wherein the computing power scheduling policy is determined by the PCF based on the computing power demand.

49. The first network function of claim 48, wherein determining the computing power data based on the computing power demand comprises:
selecting, based on the computing power demand, the computing power data from a local database.

50. The first network function of claim 48, wherein determining the computing power data based on the computing power demand comprises:
receiving computing power data transmitted from a unified data management (UDM), wherein the computing power data are determined by the UDM based on the computing power demand.

51. The first network function of claim 48, wherein determining the computing power data based on the computing power demand comprises:
querying and obtaining the computing power data from the UDR based on the computing power demand.

52. The first network function of claim 39, wherein in case that the first network function is the SMF or the UPF, the processor is further used for reading the computer program from the memory and performing the following operations:
transmitting a query request message to the NRF, wherein the query request message is used to query a network function (NF) providing a computing power data storage service;
receiving a query response message transmitted from the NRF; and
determining the NF providing the computing power data storage service based on the query response message.

53. The first network function of claim 39, wherein in case that the first network function is the NRF, the processor is further used for reading the computer program from the memory and performing the following operations:
receiving a network function (NF) registration request message transmitted from an NF, wherein the NF registration request message comprises NF registration information; and
storing the NF registration information.

54. The first network function of claim 39, wherein in case that the first network function is the NRF, the processor is further used for reading the computer program from the memory and performing the following operations:
receiving a network function (NF) deregistration request message transmitted from an NF, wherein the NF deregistration request message comprises NF indication information; and
deleting NF registration information indicated by the NF indication information.

55. The first network function of claim 39, wherein in case that the first network function is the NRF, the processor is further used for reading the computer program from the memory and performing the following operations:
receiving a network function (NF) update request message transmitted from an NF, wherein the NF update request message comprises NF indication information; and
updating NF registration information indicated by the NF indication information.

56. The first network function of any of claims 38 to 55, wherein the computing power data comprise one or more types of the following data:
computing power node registration data;
computing power node state awareness data;
computing power service mirror data; or
computing power scheduling policy data.

57. An apparatus for computing-network convergence, for use in a unified data repository (UDR), comprising:
a first receiving module, used for receiving a first message transmitted from a first network function; and
a managing module, used for managing computing power data based on the first message,
wherein the first network function comprises one or more types of the following network functions:
access and mobility management function (AMF);
network repository function (NRF);
session management function (SMF); or
user plane function (UPF).

58. The apparatus of claim 57, wherein the first network function comprises one or more types of the following network functions:
access and mobility management function (AMF);
network repository function (NRF);
session management function (SMF); or
user plane function (UPF).

59. The apparatus of claim 58, wherein the first message comprises one or more of the following messages:
computing power data storage request message;
computing power data deletion request message;
computing power data update request message;
computing power data synchronization request message; or
computing power data query request message.

60. The apparatus of claim 58, wherein the managing module is further used for:
obtaining the computing power data storage request message comprised in the first message, wherein the computing power data storage request message comprises computing power data; and
storing the computing power data.

61. The apparatus of claim 58, wherein the managing module is further used for:
obtaining the computing power data deletion request message comprised in the first message, wherein the computing power data deletion request message comprises a computing power node identifier; and
deleting computing power data corresponding to a computing power node indicated by the computing power node identifier.

62. The apparatus of claim 58, wherein the managing module is further used for:
obtaining the computing power data update request message comprised in the first message, wherein the computing power data update request message comprises a computing power node identifier and target computing power data; and
updating computing power data corresponding to a computing power node indicated by the computing power node identifier to the target computing power data.

63. The apparatus of claim 58, wherein the managing module is further used for:
obtaining the computing power data synchronization request message comprised in the first message, wherein the computing power data synchronization request message comprises synchronization range indication information; and
transmitting, based on the synchronization range indication information, computing power data within a synchronization range indicated by the synchronization range indication information to the first network function.

64. The apparatus of claim 58, wherein the managing module is further used for:
obtaining the computing power data query request message comprised in the first message, wherein the computing power data query request message comprises a query condition; and
transmitting, based on the query condition, computing power data meeting the query condition to the first network function.

65. The apparatus of claim 57, further comprising a second transmitting module,
wherein the second transmitting module is used for transmitting a second message to the first network function,
wherein the second message comprises one or more of the following messages:
computing power data storage response message;
computing power data deletion response message;
computing power data update response message;
computing power data synchronization response message; or
computing power data query response message.

66. The apparatus of any of claims 57 to 65, wherein the computing power data comprise one or more types of the following data:
computing power node registration data;
computing power node state awareness data;
computing power service mirror data; or
computing power scheduling policy data.

67. An apparatus for computing-network convergence, for use in a first network function, comprising:
a first transmitting module, used for transmitting a first message to a unified data repository (UDR), wherein the first message is used for the UDR to manage computing power data; and
wherein the first network function comprises one or more types of the following network functions:
access and mobility management function (AMF);
network repository function (NRF);
session management function (SMF); or
user plane function (UPF).

68. The apparatus of claim 67, wherein the first message comprises one or more of the following messages:
computing power data storage request message;
computing power data deletion request message;
computing power data update request message;
computing power data synchronization request message; or
computing power data query request message.

69. The apparatus of claim 68, further comprising:
a second receiving module, used for receiving a third message transmitted from a computing power node; and
a first generating module, used for generating the first message based on the third message,
wherein the third message comprises one or more of the following messages:
computing power node registration request message;
computing power node deregistration request message; or
computing power node state awareness response message.

70. The apparatus of claim 69, wherein the first generating module is further used for:
obtaining the computing power node registration request message comprised in the third message, wherein the computing power node registration request message comprises computing power data of the computing power node;
generating a computing power node identifier for the computing power node; and
generating the first message based on the computing power data and the computing power node identifier.

71. The apparatus of claim 69, wherein the first generating module is further used for:
obtaining the computing power node deregistration request message comprised in the third message, wherein the computing power node deregistration request message comprises a computing power node identifier; and
generating the first message based on the computing power node identifier.

72. The apparatus of claim 69, wherein the first generating module is further used for:
obtaining the computing power node state awareness response message comprised in the third message, wherein the computing power node state awareness response message comprises computing power node state awareness data and a computing power node identifier; and
generating the first message based on the computing power node state awareness data and the computing power node identifier.

73. The apparatus of claim 67, further comprising:
a third receiving module, used for receiving a fourth message transmitted from the UPF; and
the fourth message comprises one or more types of the following information:
computing power data storage information;
computing power data deletion information; or
computing power data update information.

74. The apparatus of claim 73, further comprising:
a third transmitting module, used for transmitting a fifth message to a computing power node; and
the fifth message comprises one or more of the following messages:
computing power node registration response message;
computing power node deregistration response message; or
computing power node state awareness request message.

75. The apparatus of claim 73, further comprising:
a fourth receiving module, used for receiving a second message transmitted from the UDR; and
wherein the second message comprises one or more of the following messages:
computing power data storage response message;
computing power data deletion response message;
computing power data update response message;
computing power data synchronization response message; or
computing power data query response message.

76. The apparatus of claim 73, wherein in case that the first network function is the SMF, the apparatus further comprises:
a fifth receiving module, used for receiving a computing power request message transmitted from a computing power management function, wherein the computing power management function is used to generate a computing power demand;
a first determining module, used for determining computing power data and a computing power scheduling policy based on the computing power request message; and
a second generating module, used for generating a computing power route based on the computing power data and the computing power scheduling policy.

77. The apparatus of claim 76, wherein the first determining module further comprises:
a first determining unit, used for determining the computing power demand based on the computing power request message;
a second determining unit, used for determining the computing power data based on the computing power demand; and
a receiving unit, used for receiving the computing power scheduling policy transmitted from a policy control function (PCF), wherein the computing power scheduling policy is determined by the PCF based on the computing power demand.

78. The apparatus of claim 77, wherein the second determining unit is further used for:
selecting, based on the computing power demand, the computing power data from a local database.

79. The apparatus of claim 77, wherein the second determining unit is further used for:
receiving computing power data transmitted from a unified data management (UDM), wherein the computing power data are determined by the UDM based on the computing power demand.

80. The apparatus of claim 77, wherein the second determining unit is further used for:
querying and obtaining the computing power data from the UDR based on the computing power demand.

81. The apparatus of claim 68, wherein in case that the first network function is the SMF or the UPF, the apparatus further comprises:
a fourth transmitting module, used for transmitting a query request message to the NRF, wherein the query request message is used to query a network function (NF) providing a computing power data storage service;
a sixth receiving module, used for receiving a query response message transmitted from the NRF; and
a second determining module, used for determining the NF providing the computing power data storage service based on the query response message.

82. The apparatus of claim 68, wherein in case that the first network function is the NRF, the apparatus further comprises:
a seventh receiving module, used for receiving a network function (NF) registration request message transmitted from an NF, wherein the NF registration request message comprises NF registration information; and
a storing module, used for storing the NF registration information.

83. The apparatus of claim 68, wherein in case that the first network function is the NRF, the apparatus further comprises:
an eighth receiving module, used for receiving a network function (NF) deregistration request message transmitted from an NF, wherein the NF deregistration request message comprises NF indication information; and
a deleting module, used for deleting NF registration information indicated by the NF indication information.

84. The apparatus of claim 68, wherein in case that the first network function is the NRF, the apparatus further comprises:
a ninth receiving module, used for receiving a network function (NF) update request message transmitted from an NF, wherein the NF update request message comprises NF indication information; and
an updating module, used for updating NF registration information indicated by the NF indication information.

85. The apparatus of any of claims 67 to 84, wherein the computing power data comprise one or more types of the following data:
computing power node registration data;
computing power node state awareness data;
computing power service mirror data; or
computing power scheduling policy data.

86. A system for computing-network convergence, comprising:
a unified data repository (UDR), used for implementing a function of the UDR and managing computing power data of a computing power node;
an access and mobility management function (AMF), used for registering and deregistering the computing power node and performing state awareness of the computing power node;
a session management function (SMF), used for computing power service orchestration and scheduling, and generating a computing power route based on a computing power orchestration and scheduling policy;
a user plane function (UPF), used for forwarding the computing power route, registering and deregistering the computing power node, and performing state awareness of the computing power node;
a policy control function (PCF), used for managing the computing power orchestration and scheduling policy;
a unified data management function (UDM), used for unified management and maintenance of the computing power node and management of the computing power data;
a network repository function (NRF), used for registering a core network function and a storage service of the core network function, registering and deregistering the computing power node, and performing state awareness of the computing power node; and
a computing power management function, used for managing external openness of the computing power data and an application demand of an awareness service, and operating and maintaining computing power.

87. A computer-readable storage medium storing a computer program, wherein the computer program is used for causing a computer to perform the method of any of claims 1 to 30.
